# NEUE EUROPÄISCHE PATENTSCHRIFT

(11) **EP 2 379 386 B2**
(45) Veröffentlichungstag und Bekanntmachung des Hinweises auf die Entscheidung über den Einspruch: **26.04.2017**
(45) Hinweis auf die Patenterteilung: 12.12.2012
(21) Anmeldenummer: 09736384.0
(22) Anmeldetag: 13.10.2009
(51) Int. Cl.: B60T 13/26, B60T 13/66, B60T 17/22, B60T 7/08

(54) **BETÄTIGUNGSEINRICHTUNG SOWIE VERFAHREN ZUM BETÄTIGEN EINER DERARTIGEN BETÄTIGUNGSEINRICHTUNG**
ACTUATING DEVICE AND METHOD FOR ACTUATING SUCH AN ACTUATING DEVICE
DISPOSITIF D'ACTIONNEMENT ET PROCÉDÉ D'ACTIONNEMENT D'UN TEL DISPOSITIF D'ACTIONNEMENT

(30) Priorität: 19.12.2008 DE 102008064077
(43) Veröffentlichungstag der Anmeldung: 26.10.2011
(73) Patentinhaber: WABCO GmbH, 30453 Hannover (DE)
(72) Erfinder: BENSCH, Uwe, 30161 Hannover (DE); DJEUTCHOUANG DJIYA, Guy, Alain, 30459 Hannover (DE); HELMER, Jörg, 88267 Vogt (DE); KIEL, Bernd-Joachim, 31515 Wunstorf (DE); ROSENDAHL, Hartmut, 30167 Hannover (DE); STRACHE, Wolfgang, 30966 Hemmingen (DE); STRUWE, Otmar, 30163 Hannover (DE); TIEDTKE, Matthias, 30449 Hannover (DE)
(74) Vertreter: Wasiljeff, Johannes M.B.
(86) Internationale Anmeldenummer: PCT/EP2009/007328
(87) Internationale Veröffentlichungsnummer: WO 2010/078880

(56) Entgegenhaltungen:
- EP-A2- 1 997 700
- EP-A2- 1 997 700
- WO-A2-03/097423
- DE-A1- 10 025 731
- DE-A1- 19 721 166
- DE-A1- 19 838 886
- DE-A1-102007 021 831

## Beschreibung

Die Erfindung betrifft eine Betätigungseinrichtung für eine Parkbremse eines Fahrzeugs gemäß dem Oberbegriff des Anspruchs 1 und ein Verfahren zum Betätigen einer Betätigungseinrichtung gemäß dem Oberbegriff des Anspruchs 20.

Fahrzeuge und insbesondere Nutzfahrzeuge weisen eine für den Fahrbetrieb vorgesehene Betriebsbremse und eine zum Feststellen des Fahrzeugs vorgesehene Parkbremse auf. Mittels der Parkbremse ist eine sog. erste Bremswirkung für das Fahrzeug unabhängig von einem Bremsvorgang der Betriebsbremse erzeugbar. Eine bekannte Betätigungseinrichtung ist Teil einer Bremsanlage des Fahrzeugs und betätigt dessen Parkbremse.

Aus der EP 1 997 700 A2 ist eine Betätigungseinrichtung für eine Bremsanlage eines Fahrzeugs mit einer für den Fahrbetrieb vorgesehenen Betriebsbremse und einer zum Feststellen des Fahrzeugs vorgesehenen Parkbremse bekannt. Die Betätigungseinrichtung weist ein manuell betätigbares Betätigungselement zur Betätigung der Parkbremse auf. Sie umfasst mehrere Schaltzustände, wobei in einem ersten Schaltzustand die Bremswirkung der Parkbremse von der Auslenkung des Betätigungselements abhängig ist und wobei in einem zweiten Schaltzustand die volle Bremswirkung der Parkbremse bereitstellbar ist. Das Betätigungselement ist derart vorgespannt, dass es ohne äußere Einwirkung eine vorbestimmte Neutralstellung einnimmt. Benachbart zur Neutralstellung ist ein von einer ersten Auslenkposition begrenzter erster Auslenkbereich vorgesehen, in dem die Betätigungseinrichtung den ersten Schaltzustand einnehmen kann. Benachbart zu dem ersten Auslenkbereich, jedoch beabstandet von der Neutralstellung, ist ein zweiter Auslenkbereich oder eine zweite Auslenkposition vorgesehen, in dem die Betätigungseinrichtung den zweiten Schaltzustand einnimmt.

Die bekannte Betätigungseinrichtung weist ein manuell betätigbares Bedienelement zur Betätigung der Parkbremse auf. Im Falle der eingelegten Parkbremse ist die Betätigungseinrichtung in einen ersten Schaltzustand schaltbar, in welchem die Parkbremse gelöst ist. Das Bedienelement weist mehrere Auslenkpositionen auf. In einer ersten Auslenkposition im Falle der gelösten Parkbremse ist die Betätigungseinrichtung hierbei in einen zweiten Schaltzustand schaltbar, in welchem die Parkbremse eingelegt ist.

Die Bremsanlage mit der bekannten Betätigungseinrichtung weist häufig wenigstens eine weitere Bremsfunktion, beispielsweise eine Anhängerkontrollfunktion, eine Anhängerbremsfunktion und/oder eine Streckbremsfunktion auf. Eine Bedienung einer Mehrzahl von Funktionen der Bremsanlage kann für einen Fahrer verwirrend sein und ist oftmals nicht mehr leicht intuitiv möglich.

Der Erfindung liegt das Problem zugrunde, eine derartige Bremsanlage einfach und intuitiv bedienbar zu machen.

Die Erfindung löst dieses Problem mit einer Betätigungseinrichtung der eingangs genannten Art, welche in einen weiteren Schaltzustand schaltbar ist, und einem Verfahren zum Betätigen der Betätigungseinrichtung, wobei die Betätigungseinrichtung in Erwiderung auf eine Betätigung in den weiteren Schaltzustand geschaltet wird.

Die Betätigungseinrichtung ist, insbesondere mittels desselben Bedienelements, in den ersten, den zweiten und in den weiteren Schaltzustand schaltbar. Mittels dem weiteren Schaltzustand ist beispielsweise eine Anhängerkontrollfunktion und/oder eine Anhängerbremsfunktion und/oder eine Streckbremsfunktion mittels ein und desselben Bedienelements schaltbar bzw. ist eine Funktion, welche ein automatisches Einlegen der Parkbremse beim Ausschalten einer Zündung verhindert, mittels der Betätigungseinrichtung, insbesondere mittels ein und desselben Bedienelements, schaltbar. Die Betätigungseinrichtung weist neben dem Bedienelement wenigstens eine Elektronik zur Bereitstellung von Schaltzuständen auf. Darüber hinaus kann die Betätigungseinrichtung jedoch auch weitere Komponenten der Bremsanlage, insbesondere eine Steuerelektronik, eine Leistungselektronik und Betätigungsmittel bzw. Aktuatoren für Bremsen, aufweisen.

Das Bedienelement der erfindungsgemäßen Betätigungseinrichtung ist intuitiv und leichter zu bedienen als das Bedienelement der bekannten Betätigungseinrichtung, mittels welchem eine Anhängerkontrollfunktion schaltbar ist, bzw. mittels welchem in Kombination mit einem separat angeordneten weiteren Bedienelement eine Anhängerbremsfunktion und/oder eine Streckbremsfunktion oder ein Deaktivieren eines automatischen Einlegens der Parkbremse beim Ausschalten der Zündung schaltbar ist bzw. sind. Auch im Falle eines separat zu betätigenden weiteren Bedienelements zum Deaktivieren des automatischen Einlegens der Parkbremse beim Ausschalten der Zündung ist eine einfache und intuitive Bedienung möglich.

Die Erfindung spart durch "Mehrfachbelegung" wenigstens ein Bedienelement ein. Hierdurch wird Platz an einem Armaturenbrett in einer Fahrzeugkabine des Fahrzeugs gespart. Dieser Platz ist begrenzt, da an diesem Armaturenbrett üblicherweise eine Vielzahl von Bedienelementen angeordnet ist.

Nicht zuletzt spart die Erfindung auch Kosten, da weniger Bedienelemente bzw. keine separate Betätigungseinrichtung zum Deaktivieren des automatischen Einlegens der Parkbremse beim Ausschalten der Zündung gefertigt und in das Fahrzeug eingebaut werden müssen bzw. muss.

Bevorzugt kann an das Fahrzeug ein Anhängefahrzeug angekoppelt werden. Mittels der Parkbremse ist eine zweite Bremswirkung für dieses Anhängefahrzeug ebenfalls unabhängig von einem Bremsvorgang der Betriebsbremse des Zugfahrzeugs erzeugbar (Anspruch 2). In dem ersten Schaltzustand ist die zweite Bremswirkung der Parkbremse nicht bereitstellbar. In dem zweiten Schaltzustand ist dagegen die, insbesondere volle, zweite Bremswirkung der Parkbremse bereitstellbar.

Das Bedienelement weist eine vorbestimmte Neutralposition auf und ist derart ausgebildet, dass es ohne äußere Einwirkung diese Neutralposition einnimmt. Die Auslenkpositionen sind in unterschiedlicher Richtung von der Neutralposition beabstandet.

In dem weiteren Schaltzustand ist gegenüber dem ersten bzw. zweiten Schaltzustand die zweite Bremswirkung, nicht jedoch die erste Bremswirkung verändert. Der weitere Schaltzustand kann deshalb beispielsweise eine Anhängerkontrollfunktion, eine Anhängerbremsfunktion oder eine Streckbremsfunktion schalten.

Mit der Anhängerkontrollfunktion kann getestet werden, ob ein aus dem Fahrzeug und dem Anhängefahrzeug bestehender Fahrzeugzug allein mittels der Parkbremse des Fahrzeugs festgestellt werden kann. Für die Anhängerkontrollfunktion ist lediglich die erste Bremswirkung an dem Fahrzeug bereitstellbar, während die zweite Bremswirkung an dem Anhängefahrzeug nicht bereitstellbar ist.

Das Fahrzeug weist vorteilhafterweise kombinierte Federspeicherbremszylinder auf, wobei ein Membranteil dieser Federspeicherbremszylinder der Betriebsbremse und ein Federspeicherteil der Parkbremse zugeordnet ist. Zum Feststellen des Fahrzeugs mittels der Parkbremse werden die im Fahrbetrieb belüfteten Federspeicherteile entlüftet, wodurch eine Feder eine Zuspannenergie zur Erzielung der ersten Bremswirkung bereitstellt.

Das Anhängefahrzeug weist hingegen Bremszylinder auf, welche sowohl von der Betriebsbremse als auch von der Parkbremse belüftet und somit betätigt werden können. Diese Bremszylinder und ggf. weitere Komponenten der Bremsanlage können somit sowohl der Betriebsbremse als auch der Parkbremse zugeordnet sein.

Im Falle der aktivierten Anhängerkontrollfunktion sind die Bremszylinder des Anhängefahrzeugs entlüftet, so dass der Fahrzeugzug lediglich mittels der Parkbremse des Zugfahrzeugs gehalten wird.

Bei der Anhängerbremsfunktion und bei der Streckbremsfunktion ist hingegen die Parkbremse des Fahrzeugs gelöst, während die Bremszylinder des Anhängefahrzeugs belüftet und somit betätigt sind. Die Anhängerbremsfunktion wird hierbei u.a. dazu verwendet, um zu kontrollieren, ob das Anhängefahrzeug bestimmungsgemäß an das Fahrzeug angekoppelt ist. Das ggf. nicht bestimmungsgemäß angekoppelte Anhängefahrzeug würde sich im Falle der aktivierten Anhängerbremsfunktion nämlich von dem Fahrzeug, wenn es anfährt, lösen.

Die Streckbremsfunktion wird hingegen bei niedrigen Geschwindigkeiten verwendet, um den Fahrzeugzug bspw. bei abfallender Fahrbahn in Kurven gestreckt zu halten.

Alternativ ist die Erfindung auch in Fahrzeugzügen bzw. Fahrzeugen mit andersartigen Bremsen, beispielsweise elektromechanisch betätigbaren Bremsen einsetzbar.

Insgesamt ist in dem weiteren Schaltzustand in dieser Ausführungsform somit immer die zweite Bremswirkung, nämlich die Bremswirkung an dem Anhängefahrzeug, entweder gegenüber dem ersten oder gegenüber dem zweiten Schaltzustand bzw. entweder gegenüber der gelösten oder gegenüber der eingelegten Parkbremse des Fahrzeugs verändert. Insbesondere ist die zweite Bremswirkung in dem weiteren Schaltzustand gegenüber dem ersten Schaltzustand dahingehend verändert, dass die Bremszylinder des Anhängefahrzeugs nunmehr betätigt sind, oder gegenüber dem zweiten Schaltzustand dahingehend verändert, dass Bremszylinder des Anhängefahrzeugs nunmehr gelöst oder zumindest derart betätigt sind, dass eine vergleichsweise geringe zweite Bremswirkung erzielbar ist. Im Extremfall kann jedoch die zweite Bremswirkung in dem weiteren Schaltzustand gegenüber der zweiten Bremswirkung in dem ersten bzw. zweiten Schaltzustand bzw. gegenüber der ersten Bremswirkung in dem weiteren Schaltzustand invertiert sein.

In einer ersten auf dieser eingangs beschriebenen Ausführungsform aufbauenden bevorzugten Ausführungsform ist im Falle der eingelegten Parkbremse die Betätigungseinrichtung in einer zweiten Auslenkposition zum Lösen der Parkbremse in den ersten Schaltzustand schaltbar (Anspruch 3). Das Schalten in den ersten Schaltzustand erfolgt hierbei entweder in der zweiten Auslenkposition oder alternativ erst dann, wenn das Bedienelement nicht mehr betätigt wird bzw. die zweite Auslenkposition wieder verlassen wurde.

In der ersten Auslenkposition ist die Betätigungseinrichtung hingegen zur Bereitstellung einer Anhängerkontrollfunktion in den weiteren Schaltzustand schaltbar, wenn zuvor der zweite Schaltzustand aktiviert war. Der weitere Schaltzustand ist ein dritter Schaltzustand, in welchem die erste Bremswirkung, nicht jedoch die zweite Bremswirkung bereitstellbar ist. Somit ist die erste Auslenkposition mit zwei Funktionen doppelt belegt. Im Falle der gelösten Parkbremse wird nämlich die Parkbremse in Erwiderung auf eine Betätigung des Bedienelements in der ersten Auslenkposition eingelegt. Im Falle der eingelegten Parkbremse bzw. nach wiederholter Betätigung des Bedienelements in der ersten Auslenkposition wird hingegen die Anhängerkontrollfunktion aktiviert, solange das Bedienelement in der ersten Auslenkposition betätigt ist. Nach Rückkehr in die Neutralposition ist hingegen wieder die Parkbremse für das Zugfahrzeug und das Anhängefahrzeug eingelegt bzw. es wird wieder der zweite Schaltzustand eingenommen.

In einer alternativen zweiten auf der eingangs beschriebenen Ausführungsform aufbauenden bevorzugten Ausführungsform ist wiederum die erste Auslenkposition doppelt belegt, nunmehr jedoch mit den Funktionen "Einlegen" und "Lösen" der Parkbremse (Anspruch 4). Somit ist im Falle der eingelegten Parkbremse die Betätigungseinrichtung in der ersten Auslenkposition zum Lösen der Parkbremse in den ersten Schaltzustand schaltbar. Auch das Schalten in den zweiten Schaltzustand erfolgt in der ersten Auslenkposition. Ggf. kann die Betätigungseinrichtung jedoch auch derart ausgebildet sein, dass sie erst nach einem Verlassen der ersten Auslenkposition, insbesondere bei Erreichen der Neutralposition, in den ersten Schaltzustand geschaltet wird.

In einer zweiten Auslenkposition ist die Betätigungseinrichtung hingegen zur Bereitstellung einer Anhängerkontrollfunktion in den weiteren Schaltzustand schaltbar, wenn zuvor der zweite Schaltzustand aktiviert war. Der weitere Schaltzustand ist wiederum ein dritter Schaltzustand, in welchem die erste Bremswirkung, nicht jedoch die zweite Bremswirkung bereitstellbar ist. Somit kann mittels der ersten Auslenkposition alternierend die Parkbremse eingelegt und wieder gelöst werden, während im Falle der eingelegten Parkbremse und im Falle der Betätigung des Bedienelements in der zweiten Auslenkposition die Anhängerkontrollfunktion so lange aktiviert wird, wie das Bedienelement in dieser zweiten Auslenkposition betätigt ist. Bei Betätigung in der zweiten Auslenkposition im Falle der gelösten Parkbremse ist die zweite Auslenkposition hingegen ohne Funktion.

In einer bevorzugten auf einer der bislang beschriebenen besonderen Ausführungsformen aufbauenden Weiterbildung der Erfindung ist im Falle der gelösten Parkbremse die Betätigungseinrichtung in der zweiten Auslenkposition oder in Erwiderung auf eine vorausgegangene Auslenkung in der zweiten Auslenkposition, insbesondere zur Bereitstellung einer Anhängerbremsfunktion, in einen vierten Schaltzustand schaltbar (Anspruch 5). In diesem vierten Schaltzustand ist die zweite Bremswirkung, nicht jedoch die erste Bremswirkung bereitstellbar. Somit sind sowohl die erste Auslenkposition als auch die zweite Auslenkposition jeweils doppelt mit Funktionen belegt. Folglich kann ein weiteres Bedienelement, nämlich ein separates Bedienelement zur Aktivierung der Anhängerbremsfunktion eingespart werden. Dennoch ist die Bedienung des Bedienelements weiterhin intuitiv möglich.

Bevorzugt weist die Betätigungseinrichtung Detektionsmittel auf, mittels denen ein Fahrzeugstillstand bzw. eine Fahrzeuggeschwindigkeit detektierbar ist, wobei die Betätigungseinrichtung ausschließlich im Falle des detektierten Fahrzeugstillstands oder geringer Fahrzeuggeschwindigkeit, d.h. bis zu einer Maximalgeschwindigkeit von weniger als 5 km/h in den vierten Schaltzustand schaltbar ist (Anspruch 6). Die Anhängerbremsfunktion kann somit nur aktiviert werden, wenn dies gefahrlos möglich ist, nämlich im Fahrzeugstillstand bzw. bei niedriger Fahrzeuggeschwindigkeit.

Die Detektionsmittel können zusätzlich einer anderen Funktion zugeordnet sein und beispielsweise Daten für eine Geschwindigkeitsanzeige und/oder ein Antiblockiersystem bereitstellen.

Bei aktivierter Anhängerbremsfunktion ist es möglich, ein bestimmungsgemäß angekoppeltes Anhängefahrzeug über ein Anfahren bzw. Anrucken des ziehenden Fahrzeuges zu erkennen. Vorteilhafterweise wird ab einer vorgegebenen Fahrzeuggeschwindigkeit, z.B. 5 km/h, automatisch vom vierten auf den ersten Schaltzustand gewechselt, da das Anhängefahrzeug, welches ein Auflieger sein kann, nicht mit gebremsten Rädern bei höheren Geschwindigkeiten, d.h. größer als 5 km/h gezogen werden darf.

In einer Weiterbildung der Erfindung ist die zweite Auslenkposition des Bedienelements sogar dreifach belegt (Anspruch 7). Im Falle der gelösten Parkbremse ist die Betätigungseinrichtung in der zweiten Auslenkposition nämlich zur Bereitstellung einer Streckbremsfunktion in einen fünften Schaltzustand schaltbar, wobei in diesem fünften Schaltzustand die zweite Bremswirkung die erste Bremswirkung übersteigt, insbesondere die zweite Bremswirkung, nicht jedoch die erste Bremswirkung bereitstellbar ist. Somit ist bei gelöster Parkbremse und solange das Bedienelement in der zweiten Auslenkposition betätigt ist, entweder die Anhängerbremsfunktion oder die Streckbremsfunktion aktiviert.

Bevorzugt wird die Streckbremsfunktion hierbei aktiviert, wenn das Fahrzeug eine Fahrgeschwindigkeit aufweist, welche sich innerhalb eines vorgegebenen oder vorgebbaren Geschwindigkeitsintervalls, insbesondere zwischen z.B. 5 km/h und z.B. 60 km/h, befindet (Anspruch 8). Das Fahrzeug verfügt deshalb über Detektionsmittel, mittels denen ein Fahrzeugstillstand bzw. eine Fahrzeuggeschwindigkeit detektierbar ist. Die Betätigungseinrichtung ist in dem Fall, dass sich eine detektierte Fahrzeuggeschwindigkeit innerhalb des vorgegebenen oder vorgebbaren Geschwindigkeitsintervalls befindet, in den fünften Schaltzustand schaltbar. Eine u.U. gefährliche Fehlbedienung des Bedienelements, insbesondere eine Aktivierung der Streckbremsfunktion bei zu hoher Geschwindigkeit, wird somit ausgeschlossen.

Bevorzugt ist im Falle der gelösten Parkbremse und in dem Fall, dass sich eine detektierte Verweildauer unterhalb einer vorgegebenen oder vorgebbaren Grenzbetätigungszeit befindet, die Betätigungseinrichtung in den bzw. einen fünften Schaltzustand schaltbar, wobei in diesem fünften Schaltzustand zur Bereitstellung einer Streckbremsfunktion die zweite Bremswirkung die erste Bremswirkung übersteigt, insbesondere die zweite Bremswirkung, nicht jedoch die erste Bremswirkung bereitstellbar ist (Anspruch 9). Somit ist die Streckbremsfunktion alternativ oder zusätzlich auch im Fahrzeugstillstand, nämlich im Falle einer hinreichend lange andauernden Betätigung des Bedienelements in der zweiten Auslenkposition, betätigbar bzw. aktivierbar. Hierfür ist die Verweildauer des Bedienelements in der zweiten Auslenkposition detektierbar. Die Streckbremsfunktion kann somit rechtzeitig aktiviert werden und bleibt ggf. auch nach Rückkehr in die Neutralposition aktiviert bis die zweite oder ggf. die erste Auslenkposition erneut erreicht wird oder ggf. die Streckbremsfunktion anderweitig manuell oder automatisch deaktiviert wird, wobei die Streckbremsfunktion in diesem Fall auch in der Neutralstellung des Bedienelements aktiviert bleibt.

Erfindungsgemäß ist vorgesehen, dass im Falle der eingelegten Parkbremse die Betätigungseinrichtung in einer zweiten Auslenkposition zum Lösen der Parkbremse in den ersten Schaltzustand schaltbar ist. Ferner weist das Bedienelement eine dritte Auslenkposition auf, wobei die Betätigungseinrichtung in dieser dritten Auslenkposition, insbesondere im Falle der gelösten Parkbremse, zur Bereitstellung einer Streckbremsfunktion in den weiteren Schaltzustand schaltbar ist. Im Gegensatz zu der ersten oder zweiten Ausführungsform ist dieser weitere Schaltzustand nunmehr kein dritter sondern ein fünfter Schaltzustand, in welchem die zweite Bremswirkung die erste Bremswirkung übersteigt, insbesondere die zweite, nicht jedoch die erste Bremswirkung bereitstellbar ist. Das Bedienelement ist somit konstruktiv derart ausgebildet, dass es eine dritte Auslenkposition ermöglicht und somit eine Mehrfachbelegung der ersten oder zweiten Auslenkposition nicht erforderlich ist.

In dieser dritten Auslenkposition ist die zweite Bremswirkung bevorzugt stufenlos oder stufbar veränderbar, wobei die dritte Auslenkposition in einem sog. ersten, insbesondere zu der Neutralposition benachbarten, Auslenkbereich angeordnet ist und sich die zweite Bremswirkung nach einer Position in diesem ersten Auslenkbereich bemisst. Die Streckbremsfunktion wird somit nicht nur eingeschaltet und wieder ausgeschaltet, sondern kann individuell in ihrer Intensität ausgesteuert werden.

In einer bevorzugten Weiterbildung weist das Bedienelement eine vierte Auslenkposition auf, welche in einem, insbesondere benachbart zu der Neutralposition angeordneten, zweiten Auslenkbereich angeordnet ist. Die Betätigungseinrichtung ist in dieser vierten Auslenkposition, insbesondere im Falle der gelösten Parkbremse, zur Bereitstellung einer dynamischen Abbremsfunktion in einen sechsten Schaltzustand schaltbar, wobei in diesem sechsten Schaltzustand die erste und die zweite Bremswirkung stufenlos oder stufbar bereitstellbar sind und wobei sich die erste und die zweite Bremswirkung nach einer Position in diesem zweiten Auslenkbereich bemessen. Somit kann die Parkbremse ähnlich wie die Betriebsbremse verwendet werden und sowohl für das Fahrzeug als auch für das Anhängefahrzeug dosiert werden. Das Dosieren erfolgt hierbei mittels des Bedienelements.

Auch in dieser Ausführungsform nimmt das Bedienelement ohne äußere Einwirkung die Neutralposition ein, insbesondere bewegt es sich aus dem ersten Auslenkbereich bzw. zweiten Auslenkbereich bevorzugt gedämpft wieder in die Neutralposition zurück, so dass sich nach Loslassen des Bedienelements die erste und die zweite Bremswirkung bzw. im Falle der aktivierten Streckbremsfunktion bevorzugt nur die zweite Bremswirkung reduzieren bzw. reduziert.

In einer bevorzugten Weiterbildung ist die Betätigungseinrichtung derart ausgebildet, dass sie in Erwiderung auf ein Verlassen der dritten bzw. vierten Auslenkposition bzw. in Erwiderung auf ein Verlassen des ersten bzw. zweiten Auslenkbereichs, insbesondere in Erwiderung auf eine Rückkehr in die Neutralposition, zum Lösen der Parkbremse in den ersten Schaltzustand zurückgeschaltet wird, insbesondere wenn die Betätigungseinrichtung sich vor der Betätigung in die dritte oder vierte Auslenkposition bzw. den ersten oder zweiten Auslenkbereich im ersten Schaltzustand befunden hat.

Das Bedienelement bzw. ein Betätigungsmittel des Bedienelements ist in der dritten Ausführungsform der Betätigungseinrichtung längs einer Achse drückbar, ziehbar und um diese Achse, insbesondere gegenüber einem Grundelement des Bedienelements, verschwenkbar, wobei ausgehend von der Neutralposition mittels Ziehen die erste Auslenkposition, mittels Drücken die zweite Auslenkposition, mittels Verschwenken in eine erste Richtung die dritte Auslenkposition und mittels Verschwenken in eine zweite Richtung die vierte Auslenkposition erreichbar sind. Hierdurch wird ein komfortables Steuern der Streckbremsfunktion bzw. ggf. der dynamischen Abbremsfunktion ermöglicht. Zudem kann leicht und schnell die Parkbremse aktiviert bzw. deaktiviert werden. Das Bedienelement kann als Betätigungsmittel beispielsweise einen Hebel oder Knauf aufweisen.

Bevorzugt ist das Bedienelement derart ausgebildet, dass die erste bzw. zweite Auslenkposition ausgehend von der zweiten bzw. ersten Auslenkposition, nämlich der jeweils anderen Auslenkposition, sowie ausgehend von der dritten und ggf. ausgehend von der vierten Auslenkposition ausschließlich über die Neutralposition erreichbar ist. Falls sich das Bedienelement in der dritten oder ggf. in der vierten Auslenkposition befindet, begibt es sich in Erwiderung auf ein Ziehen oder Drücken zunächst in die Neutralposition und ggf. hiernach in die erste bzw. zweite Auslenkposition. Hierdurch wird einer Fehlbedienung entgegengewirkt. Die Parkbremse kann erst eingelegt werden, wenn die dynamische Abbremsfunktion bzw. die Streckbremsfunktion deaktiviert ist.

In einer auf einer der vorgenannten besonderen Ausführungsformen aufbauenden Weiterbildung der Erfindung ist die Betätigungseinrichtung in einen siebten Schaltzustand schaltbar. Alternativ hierzu ist der weitere Schaltzustand der siebte Schaltzustand. In diesem Fall muss an das Fahrzeug nicht zwingend ein Anhängefahrzeug angekoppelt bzw. ankoppelbar sein.

Die Betätigungseinrichtung bzw. eine die Betätigungseinrichtung aufweisende Bremsanlage weist eine Automatik auf, welche das Fahrzeug feststellt, sobald die Zündung ausgeschaltet wird. Somit wird einem unbeabsichtigten Wegrollen des abgestellten Fahrzeugs entgegengewirkt. In dem Fall, dass die Betätigungseinrichtung sich in dem ersten Schaltzustand befindet, ist die Betätigungseinrichtung in Erwiderung auf ein Ausschalten der Zündung deshalb automatisch in den zweiten Schaltzustand schaltbar.

Falls die Betätigungseinrichtung sich jedoch in dem siebten Schaltzustand befindet, wenn die Zündung ausgeschaltet wird, dann wird ein automatisches Feststellen des Fahrzeugs unterdrückt. Das Fahrzeug kann ungebremst abgestellt werden, was zum Beispiel in einer Werkstatt, beim Wechseln von Bremsbelägen, beim Abschleppen und zur Vorbeugung gegen ein Festfrieren der Bremse erforderlich bzw. vorteilhaft sein kann.

In einer vorteilhaften Weiterbildung ist die Betätigungseinrichtung derart ausgebildet ist, dass sie in der Auslenkposition des Bedienelements für die Dauer seiner Betätigung in den siebten Schaltzustand geschaltet wird und erst nach Verlassen dieser Auslenkposition bzw. nach Rückkehr in die Neutralposition bzw. nach Beendigung der Betätigung in den ersten Schaltzustand geschaltet wird (Anspruch 18). Die Betätigungseinrichtung befindet sich somit für die Dauer der Betätigung des Bedienelements in dem siebten Schaltzustand. Folglich wird ein automatisches Einlegen der Parkbremse unterdrückt, wenn während der Betätigung des Bedienelements die Zündung ausgeschaltet wird. Wenn die Zündung jedoch erst dann ausgeschaltet wird, wenn das Bedienelement nicht mehr betätigt wird, dann wird automatisch die Parkbremse eingelegt. Die Betätigungseinrichtung befindet sich nach Beendigung der Betätigung des Bedienelements nämlich nicht mehr in dem siebten sondern in dem ersten Schaltzustand, in welchem das automatische Umschalten in dem zweiten Schaltzustand zum automatischen Einlegen der Parkbremse nicht unterdrückt wird.

Alternativ oder zusätzlich zu dem Schalten in den siebten Schaltzustand mittels eines "Gedrückthaltens" des Bedienelements kann auch ein weiteres Bedienelement zum Schalten vorgesehen sein, wobei die Betätigungseinrichtung in Erwiderung auf eine Betätigung des weiteren Bedienelements für die Dauer der Betätigung oder für eine vorbestimmte Zeitdauer oder bis zur Betätigung des Bedienelements oder bis zur erneuten Betätigung des weiteren Bedienelements oder bis zur Betätigung eines anderen weiteren Bedienelements in den siebten Schaltzustand schaltbar ist (Anspruch 19). Vorteilhafterweise ist das weitere Bedienelement hierbei ein bereits für eine weitere Funktion vorgesehenes Bedienelement, so dass durch eine Mehrfachbelegung dieses weiteren Bedienelements ein separates Bedienelement allein zum Schalten des siebten Schaltzustands nicht erforderlich ist.

Ein Schalten in eine Auslenkposition kann erfolgen, wenn das Bedienelement die jeweilige Auslenkposition aufweist. Ggf. kann hierunter aber auch zu verstehen sein, dass dieses Schalten erst erfolgt, wenn das Bedienelement nicht mehr betätigt wird bzw. die jeweilige Auslenkposition bzw. den jeweiligen Auslenkbereich verlassen oder seine Position im Auslenkbereich verändert hat.

Weitere Ausführungsformen ergeben sich aus den Ansprüchen sowie aus den anhand der Zeichnung näher erläuterten Ausführungsbeispielen. In der Zeichnung zeigen:
- Fig. 1: ein Bedienelement einer Betätigungseinrichtung gemäß einem ersten Ausführungsbeispiel der Erfindung;
- Fig. 2: das Bedienelement von Fig. 1 einer Betätigungseinrichtung gemäß einem zweiten Ausführungsbeispiel der Erfindung;
- Fig. 3: das Bedienelement von Fig. 1 einer Betätigungseinrichtung gemäß einem dritten Ausführungsbeispiel der Erfindung;
- Fig. 4: das Bedienelement von Fig. 1 einer Betätigungseinrichtung gemäß einem vierten Ausführungsbeispiel der Erfindung;
- Fig. 5: das Bedienelement von Fig. 1 einer Betätigungseinrichtung gemäß einem fünften Ausführungsbeispiel der Erfindung;
- Fig. 6: das Bedienelement von Fig. 1 einer Betätigungseinrichtung gemäß einem sechsten Ausführungsbeispiel der Erfindung;
- Fig. 7: ein Flussdiagramm zur Veranschaulichung von Schaltvorgängen, welche mittels der Betätigungseinrichtung gemäß dem ersten, zweiten, dritten, vierten, fünften und sechsten sowie einem siebten, achten und neunten Ausführungsbeispiel durchführbar sind;
- Fig. 8: ein Flussdiagramm, welches die Schaltvorgänge der Betätigungseinrichtung gemäß den Ausführungsbeispielen 1, 2 und 3 umfasst;
- Fig. 9: ein Flussdiagramm, welches die Schaltvorgänge der Betätigungseinrichtung gemäß den Ausführungsbeispielen 4, 5, 6, 8 und 9 umfasst;
- Fig. 10: einen Ausschnitt eines Flussdiagramms, welcher in den Fig. 8 und 9 zwischen Positionen A und B angeordnet sein kann bzw. im Falle der Ausführungsbeispiele 1, 2 und 3 bzw. 4, 5 und 6 angeordnet ist;
- Fig. 11: einen Ausschnitt eines Flussdiagramms, welcher in den Fig. 8 und 9 zwischen den Positionen C und D angeordnet sein kann bzw. im Falle der Ausführungsbeispiele 2 und 3 bzw. 5 und 6 angeordnet ist;
- Fig. 12: einen Ausschnitt eines Flussdiagramms, welcher in Fig. 11 zwischen den Positionen E und F angeordnet sein kann bzw. im Falle des Ausführungsbeispiels 3 bzw. 6 angeordnet ist;
- Fig. 13: einen Ausschnitt eines Flussdiagramms, welcher bei einer Betätigungseinrichtung gemäß dem siebten bzw. achten Ausführungsbeispiel der Erfindung zwischen den Positionen C und D anstelle des Ausschnitts von Fig. 11 in dem Flussdiagramm von Fig. 8 bzw. 9 angeordnet ist;
- Fig. 14: ein Bedienelement einer Betätigungseinrichtung gemäß dem neunten Ausführungsbeispiel der Erfindung und
- Fig. 15: einen Ausschnitt eines Flussdiagramms, welcher in Fig. 9 zwischen den Positionen G und H eingefügt werden kann bzw. bei einer Betätigungseinrichtung mit dem Bedienelement von Fig. 14 gemäß dem neunten Ausführungsbeispiel der Erfindung eingefügt ist.

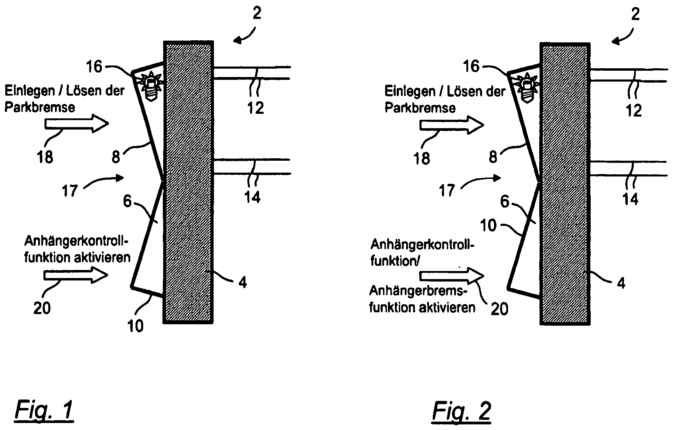

Fig. 1 zeigt ein Bedienelement 2 einer Betätigungseinrichtung gemäß einem ersten Ausführungsbeispiel der Erfindung. Dieses Bedienelement 2 weist ein Grundelement 4 und ein als Schalterwippe ausgebildetes Betätigungsmittel 6 auf. Die Schalterwippe 6 weist wiederum einen oberen Tastbereich 8 und einen unteren Tastbereich 10 auf. Ferner weist das Bedienelement 2 elektrische Anschlusspaare 12 und 14 auf. Hinter dem oberen Tastbereich 8 ist ferner ein Leuchtmittel 16, bspw. eine Glühlampe oder eine Leuchtdiode angeordnet.

Das Bedienelement 2 ist durch Druck auf den oberen Tastbereich 8 oder den unteren Tastbereich 10 manuell betätigbar. Zur Betätigung des Bedienelements 2 wird die Schalterwippe 6 durch Druck von links auf den oberen Tastbereich 8 oder den unteren Tastbereich 10 um eine senkrecht zur Betrachtungsebene angeordnete Achse verschwenkt. Während der obere Tastbereich 8 in Richtung des Grundelements 4 verschwenkt ist, ist der untere Tastbereich 10 von diesem Grundelement 4 weggeschwenkt und umgekehrt.

Ohne äußere Einwirkung nimmt das Bedienelement 2 eine vorbestimmte Neutralposition 17 ein, welche in Fig. 1 dargestellt ist. Das Betätigen des Bedienelements 2 erfolgt gegen den Druck wenigstens einer Feder. Diese Feder ist vorzugsweise mit einer progressiven Kennlinie ausgestattet. Die Feder kann jedoch auch eine degressive oder proportionale Kennlinie aufweisen.

Das Leuchtmittel 16 kann entweder für eine Dauer der Betätigung des Bedienelements 2 leuchten, kann jedoch alternativ auch derart angesteuert werden, dass ein Leuchten des Leuchtmittels 16 einem Schaltzustand der Betätigungseinrichtung zugeordnet ist. Entsprechend kann ein Nicht-Leuchten des Leuchtmittels 16 einem anderen Schaltzustand der Betätigungseinrichtung zugeordnet sein. Auch ist es möglich, Leuchtmittel mit mehreren Farben vorzusehen, wobei jede Farbe einem anderen Schaltzustand zugeordnet ist. Darüber hinaus kann auch zusätzlich oder alternativ ein Leuchtmittel hinter dem unteren Tastbereich 10 vorgesehen sein. Alternativ ist auch eine Anordnung des Leuchtmittels 16 abseits von der Schalterwippe 6 und ggf. auch abseits des Bedienelements 2 möglich.

Die Betätigungseinrichtung dient der Betätigung einer Parkbremse eines Fahrzeugs, wobei in diesem Ausführungsbeispiel der Erfindung an das Fahrzeug ein Anhängefahrzeug angekoppelt sein kann und wobei das Fahrzeug und das Anhängefahrzeug zusammen einen Fahrzeugzug bilden. Das Anhängefahrzeug kann hierbei insbesondere auch ein Auflieger sein.

Das Fahrzeug weist eine für den Fahrbetrieb vorgesehene Betriebsbremse und eine zum Feststellen des Fahrzeugs vorgesehene Parkbremse auf. Mittels der Parkbremse ist hierbei eine erste Bremswirkung für das Fahrzeug und eine zweite Bremswirkung für das Anhängefahrzeug unabhängig von einem Bremsvorgang der Betriebsbremse erzeugbar.

In Erwiderung auf ein Drücken auf den oberen Tastbereich 8 der Schalterwippe 6 erreicht das Bedienelement 2 eine von der Neutralposition 17 beabstandete erste Auslenkposition 18, welche durch einen Pfeil symbolisiert ist. In Erwiderung auf ein Drücken auf den unteren Tastbereich 10 der Schalterwippe 6 wird hingegen eine von der Neutralposition 17 beabstandete und durch einen weiteren Pfeil symbolisierte zweite Auslenkposition 20 des Bedienelements 2 erreicht.

Die Betätigungseinrichtung ist in mehrere Schaltzustände schaltbar. Diese Schaltzustände sind alternativ wählbar, so dass zu jeder Zeit nur ein Schaltzustand aktiv ist. Ein Wechsel zwischen den Schaltzuständen erfolgt mittels einer Betätigung des Bedienelements 2. Ggf. kann jedoch auch automatisch, bspw. in Abhängigkeit von Fahrzuständen bzw. Fahrzeugzuständen, zwischen den Schaltzuständen gewechselt werden.

In dem ersten Ausführungsbeispiel ist die erste Auslenkposition 18, welche in Erwiderung auf eine Betätigung des oberen Tastbereichs 8 der Schalterwippe 6 erreicht wird, doppelt belegt. In einem ersten Schaltzustand ist die Parkbremse gelöst, wobei die erste und zweite Bremswirkung der Parkbremse nicht bereitstellbar ist. In Erwiderung auf ein Erreichen der ersten Auslenkposition 18 schaltet die Betätigungseinrichtung in den zweiten Schaltzustand, in welchem die Parkbremse eingelegt ist. Hiernach muss erst die Neutralposition 17 erreicht werden, bevor die Betätigungseinrichtung in Erwiderung auf ein erneutes Erreichen der ersten Auslenkposition 18 wieder in den ersten Schaltzustand zurückschalten kann.

Die Betätigungseinrichtung kann derart ausgebildet sein, dass sie direkt in den ersten Schaltzustand geschaltet wird, sobald die erste Auslenkposition 18 erreicht ist. Alternativ kann die Betätigungseinrichtung aber auch derart ausgebildet sein, dass sie in der ersten Auslenkposition 18 zunächst in einen siebten Schaltzustand geschaltet wird, solange das Bedienelement 2 sich in der ersten Auslenkposition 18 befindet. Erst in Erwiderung auf ein Verlassen der ersten Auslenkposition 18 oder in Erwiderung auf ein Erreichen der Neutralposition 17 wird die Betätigungseinrichtung in diesem Fall in den ersten Schaltzustand zurückgeschaltet.

In dem siebten Schaltzustand ist die Parkbremse gelöst. Der erste und der siebte Schaltzustand unterscheiden sich dadurch voneinander, dass die Betätigungseinrichtung in dem ersten Schaltzustand in Erwiderung auf ein Ausschalten einer Zündung automatisch in den zweiten Schaltzustand geschaltet wird, damit das abgestellte Fahrzeug nicht unbeabsichtigt wegrollt. In dem siebten Schaltzustand wird ein automatisches Schalten in den zweiten Schaltzustand hingegen unterdrückt.

Das automatische Einlegen der Parkbremse kann eine parametrierbare Funktion der Betätigungseinrichtung sein. Insbesondere kann der Hersteller der Betätigungseinrichtung oder eines die Betätigungseinrichtung aufweisenden Fahrzeugs diese Funktion optional in die Betätigungseinrichtung integrieren oder zwar standardmäßig integrieren, jedoch wahlweise aktivieren oder deaktivieren. Hierfür wird beispielsweise eine Funktion in einer Software vorgesehen, welche in der Software wahlweise aktiviert oder deaktiviert werden kann.

Wenn sich die Betätigungseinrichtung in dem zweiten Schaltzustand befindet, bzw. wenn die Parkbremse eingelegt ist, kann die Betätigungseinrichtung in Erwiderung auf ein Erreichen der zweiten Auslenkposition 20 in einen weiteren, nämlich einen dritten, Schaltzustand geschaltet werden. In diesem dritten Schaltzustand wird für eine Anhängerkontrollfunktion für die Dauer der Betätigung des Bedienelements 2, insbesondere solange die zweite Auslenkposition erreicht ist oder solange die Neutralposition nicht wieder erreicht ist, die zweite Bremswirkung nicht bereitgestellt bzw. die Parkbremse des Anhängefahrzeugs gelöst. Es kann somit festgestellt werden, ob die erste Bremswirkung bzw. die Parkbremse des Fahrzeugs bzw. Zugfahrzeugs in der Lage ist, den gesamten Fahrzeugzug einschließlich des ungebremsten Anhängefahrzeugs festgestellt zu halten. Dies ist von Vorteil, wenn der Fahrzeugzug länger abgestellt werden soll und die zweite Bremswirkung nur bei belüfteten Bremszylindern am Anhängefahrzeug erreicht wird. Wenn nach längerer Zeit durch einen Druckverlust diese Bremszylinder entlüftet sind, entfällt nämlich die zweite Bremswirkung, so dass der Fahrzeugzug allein mittels der ersten Bremswirkung der Parkbremse des Zugfahrzeugs gehalten werden muss.

Fig. 2 zeigt das Bedienelement 2 von Fig. 1 in einer Betätigungseinrichtung gemäß einem zweiten Ausführungsbeispiel der Erfindung. Das Bedienelement 2 dieses zweiten Ausführungsbeispiels ist somit wie auch das Bedienelement 2 der Ausführungsbeispiele 3, 4, 5 und 6 baulich das gleiche wie das im Zusammenhang mit der Betätigungseinrichtung beschriebene Bedienelement 2.

Die Betätigungseinrichtung dieses zweiten Ausführungsbeispiels unterscheidet sich dadurch von der Betätigungseinrichtung des ersten Ausführungsbeispiels gemäß Fig. 1, dass nunmehr auch die zweite Auslenkposition 20 doppelt mit schaltbaren Funktionen belegt ist. Während ein Erreichen der zweiten Auslenkposition 20 ausgehend von dem ersten Schaltzustand bei der Betätigungseinrichtung gemäß dem ersten Ausführungsbeispiel ohne Funktion bleiben kann, wird gemäß dem zweiten Ausführungsbeispiel für die Dauer der Betätigung ein vierter Schaltzustand aktiviert, welcher beispielsweise eine Anhängerbremsfunktion bereitstellt. Somit kann bei gelöster Parkbremse durch Drücken auf den unteren Tastbereich 10 bzw. auf eine die zweite Auslenkposition erreichende Auslenkung temporär das Anhängefahrzeug eingebremst werden.

Aus Sicherheitsgründen ist die Aktivierung des vierten Schaltzustands daran gekoppelt, dass das Fahrzeug entweder steht oder zumindest mit einer Geschwindigkeit von weniger als 5 km pro Stunde fährt. In Erwiderung auf eine Aktivierung der Anhängerbremsfunktion wird das Anhängefahrzeug abrupt eingebremst, was von einem Fahrer in dem Fahrzeug als Rucken wahrnehmbar ist bzw. das Zugfahrzeug beim Anfahren zurückhält. Hieran kann der Fahrer erkennen, ob das Anhängefahrzeug bestimmungsgemäß an das Fahrzeug angekoppelt ist und ob die Bremsen des Anhängefahrzeugs eine Bremswirkung erzeugen.

Die weitere Funktionalität der Betätigungseinrichtung gemäß dem zweiten Ausführungsbeispiel entspricht der Funktionalität der in dem ersten Ausführungsbeispiel beschriebenen Betätigungseinrichtung.

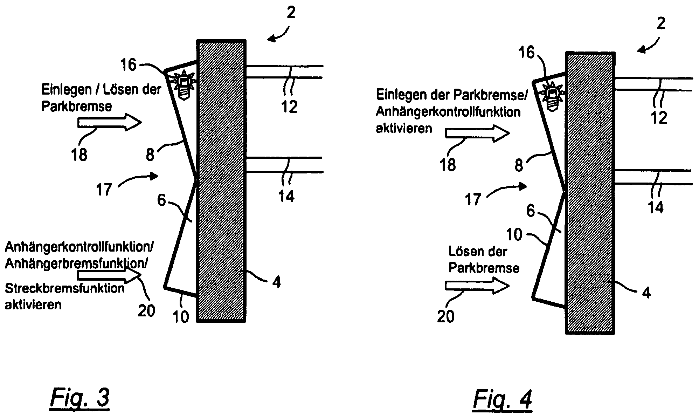

Fig. 3 zeigt das Bedienelement 2 in einer Betätigungseinrichtung gemäß einem dritten Ausführungsbeispiel der Erfindung. Dieses dritte Ausführungsbeispiel baut auf dem zweiten Ausführungsbeispiel auf. Insbesondere ist wiederum die erste Auslenkposition 18 doppelt mit den Funktionen Einlegen und Lösen der Parkbremse belegt. Die zweite Auslenkposition ist jedoch in diesem Fall nicht nur doppelt mit dem temporären Schalten in den dritten oder vierten Schaltzustand bzw. mit der temporären Aktivierung der Anhängerkontrollfunktion und der Anhängerbremsfunktion sondern dreifach belegt. Zusätzlich ist nämlich nun ein fünfter Schaltzustand bzw. eine Streckbremsfunktion vorgesehen.

Dieser fünfte Schaltzustand wird wie der vierte Schaltzustand ausgehend von dem ersten Schaltzustand bei Erreichen der zweiten Auslenkposition 18 geschaltet. Die Betätigungseinrichtung entscheidet hierbei in Abhängigkeit von einer detektierten Fahrzeuggeschwindigkeit, ob in den vierten oder fünften Schaltzustand geschaltet oder in dem ersten Schaltzustand verblieben werden soll. Im Fahrzeugstillstand oder bei niedrigen Geschwindigkeiten kleiner als 5 km pro Stunde wird die Betätigungseinrichtung in den vierten Schaltzustand geschaltet bzw. die Anhängerbremsfunktion aktiviert. In einem Intervall zwischen 5 km pro Stunde und 60 km pro Stunde wird hingegen die Streckbremsfunktion aktiviert.

Bei größeren Geschwindigkeiten verbleibt die Betätigungseinrichtung in dem ersten Schaltzustand. Auch bei Erreichen der Maximalgeschwindigkeit von 5 km pro Stunde für die Anhängerbremsfunktion oder bei Überschreiten einer Grenze des Geschwindigkeitsintervalls zwischen 5 km pro Stunde und 60 km pro Stunde bei der Streckbremsfunktion wird die Betätigungseinrichtung automatisch in den ersten Schaltzustand zurückgeschaltet.

Ggf. kann auch erst ein akustisches oder optisches Warnsignal ausgegeben und erst nach einer vorgegebenen Zeitdauer automatisch in den ersten Schaltzustand zurückgeschaltet werden, um dem Fahrer die Möglichkeit zu geben, die Fahrzeuggeschwindigkeit entsprechend anzupassen und damit ein ungewolltes Zurückschalten in den ersten Schaltzustand noch verhindern zu können.

Die Streckbremsfunktion kann die volle zweite Bremswirkung für das Anhängefahrzeug bereitstellen. Alternativ kann die Streckbremsfunktion jedoch auch nur eine gegenüber der vollen zweiten Bremswirkung verminderte Bremswirkung für das Anhängefahrzeug bereitstellen. Eine Bremswirkung kann vorgegeben oder auch einstellbar sein.

Ggf. kann auch das Bedienelement 2 abweichend ausgebildet sein. Die Streckbremsfunktion kann beispielsweise mittels der Schalterwippe 6 stufbar oder stufenlos betätigbar sein. Eine Betätigung der Schalterwippe 6 mit einem vergleichsweise niedrigen Druck auf den unteren Tastbereich 10 führt beispielsweise zu einer lediglich geringen zweiten Bremswirkung am Anhängefahrzeug. Ein entsprechend höherer Druck erhöht die zweite Bremswirkung. Alternativ kann die Bremswirkung mittels eines separaten Bedienelements einstellbar sein.

In einer weiteren Alternative zu dem dritten Ausführungsbeispiel wird die Betätigungseinrichtung nicht von dem fünften Schaltzustand in den ersten Schaltzustand zurückgeschaltet, wenn die zweite Auslenkposition 20 verlassen oder die Neutralposition 17 erreicht wird. Statt dessen bleibt die Streckbremsfunktion so lange aktiviert, bis die zweite Auslenkposition 20 erneut erreicht wird oder die erste Auslenkposition 18 erreicht wird oder eine Elektronik in Erwiderung auf einen erkannten definierten Fahrzustand oder Fahrzeugzustand automatisch den fünften Schaltzustand deaktiviert und in den ersten Schaltzustand zurückschaltet.

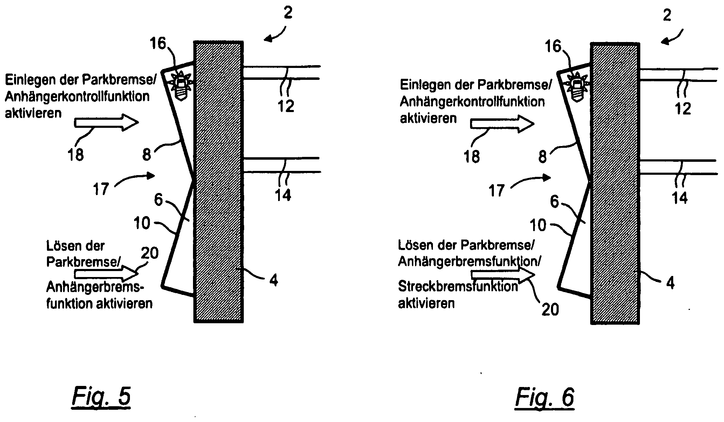

Fig. 4, Fig. 5 und Fig. 6 zeigen Betätigungseinrichtungen gemäß einem vierten, einem fünften und einem sechsten Ausführungsbeispiel der Erfindung. Diese Betätigungseinrichtungen gleichen den Betätigungseinrichtungen gemäß den Ausführungsbeispielen 1, 2 und 3. Insbesondere weisen diese Betätigungseinrichtungen wiederum das gleiche Bedienelement 2 auf. Auch ist die erste Auslenkposition 18 wiederum doppelt belegt, während die zweite Auslenkposition 20 einfach bzw. zweifach bzw. dreifach belegt ist. In den Ausführungsbeispielen 4, 5 und 6 ist im Gegensatz zu den Ausführungsbeispielen 1, 2 und 3 jedoch der erste Schaltzustand in der zweiten Auslenkposition 20 und der dritte Schaltzustand in der ersten Auslenkposition 18 erreichbar. Die Bedingungen zum Erreichen des ersten bzw. dritten Schaltzustands sind die oben beschriebenen. Auch die oben beschriebenen Alternativen zu den Betätigungseinrichtungen gemäß den Ausführungsbeispielen 1, 2 und 3 können analog auch als Alternativen für die Betätigungseinrichtungen gemäß den Ausführungsbeispielen 4, 5 und 6 vorgesehen sein.

Die Betätigungseinrichtungen gemäß den Ausführungsbeispielen 4, 5 und 6 ordnen das Einlegen der Parkbremse und die bei eingelegter Parkbremse temporär aktivierbare Anhängerkontrollfunktion beide der ersten Auslenkposition 18 zu. Somit kann der Fahrer ohne Wechsel des Tastbereiches 10 zunächst die Parkbremse einlegen und hiernach die Anhängerkontrollfunktion aktivieren.

Entsprechend ist das Lösen der Parkbremse ggf. zusammen mit der bei gelöster Parkbremse temporär aktivierbaren Anhängerbremsfunktion und ggf. der Streckbremsfunktion dem zweiten Auslenkbereich 20 zugeordnet. Der Fahrer hat somit klar getrennte Tastbereiche 8 und 10 zum Einlegen und zum Lösen der Parkbremse. Darüber hinaus kann der Fahrer bei den Betätigungseinrichtungen gemäß den Ausführungsbeispielen 5 und 6 direkt nach dem Lösen der Parkbremse die Anhängerbremsfunktion aktivieren, ohne von dem unteren Tastbereich 10 zu dem oberen Tastbereich 8 oder zu einem separaten Bedienelement wechseln zu müssen. Entsprechendes gilt für die Streckbremsfunktion gemäß dem sechsten Ausführungsbeispiel, wobei das Fahrzeug hierbei zwischen dem Lösen der Parkbremse und dem Einlegen der Streckbremsfunktion jedoch beschleunigt werden sollte so dass sich die Fahrzeuggeschwindigkeit in dem vorgegebenen Geschwindigkeitsintervall befindet.

Alternativ kann die Streckbremsfunktion jedoch auch schon im Stand oder bei Geschwindigkeiten kleiner als 5 km/h aktiviert werden, wenn bspw. nur kurz die zweite Auslenkposition 20 erreicht wird. Eine kurze Betätigung meint hierbei eine Betätigungszeit, welche unterhalb einer vorgegebenen Grenzbetätigungszeit liegt. Somit wird im Fahrzeugstillstand oder bei einer Geschwindigkeit kleiner als 5 km/h im Falle der kurzen Betätigungszeit die Streckbremsfunktion aktiviert und im Falle jeder darüber hinausgehenden Betätigungszeit die Anhängerbremsfunktion aktiviert. Die in der kurzen Betätigungszeit aktivierte Streckbremsfunktion bleibt somit auch in der Neutralposition 17 aktiviert. Eine Deaktivierung erfolgt durch eine erneute Betätigung des Bedienelements 2 oder automatisch oder mittels eines separaten Bedienelements.

Bei allen Ausführungsbeispielen 1 bis 6 kann von dem ersten bzw. zweiten Schaltzustand temporär in den dritten und ggf. auch in den vierten und/oder fünften Schaltzustand umgeschaltet werden. Die Betätigungseinrichtung ist von dem ersten Schaltzustand ggf. in den vierten oder fünften Schaltzustand schaltbar und wird nach Beendigung dieses vierten bzw. fünften Schaltzustands wieder in den ersten Schaltzustand zurückgeschaltet. Entsprechend ist der dritte Schaltzustand von dem zweiten Schaltzustand erreichbar, wobei die Betätigungseinrichtung nach Beendigung des dritten Schaltzustandes in den zweiten Schaltzustand zurückgeschaltet wird.

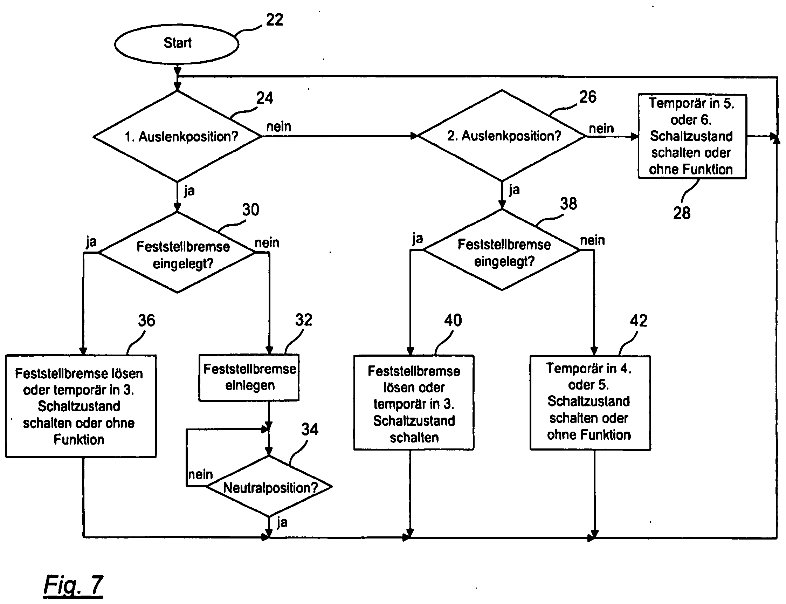

Fig. 7 zeigt ein Flussdiagramm, welches Vorgänge beim Schalten mittels der erfindungsgemäßen Betätigungseinrichtung gemäß dem ersten bis sechsten sowie dem weiter unten beschriebenen siebten, achten und neunten Ausführungsbeispielen veranschaulicht. Gestartet wird in einem Schritt 22, bspw. wenn die Betätigungseinrichtung bei einer Inbetriebnahme des Fahrzeugs mit elektrischer Energie versorgt wird. Die Betätigungseinrichtung prüft in Schritt 24, ob sich das Bedienelement 2 gemäß einem der Ausführungsbeispiele 1 bis 6 oder alternativ ein anders ausgebildetes Bedienelement dieser Betätigungseinrichtung in der ersten Auslenkposition 18 befindet. Ist dies nicht der Fall, prüft die Betätigungseinrichtung in Schritt 26, ob sich das Bedienelement 2 in der zweiten Auslenkposition 20 befindet. Ist auch dies nicht der Fall, folgt bei einer der Betätigungseinrichtungen der Ausführungsbeispiele gemäß den Fig. 1 bis 6 erneut die Prüfung in Schritt 24. Das Bedienelement 2 befindet sich in der Neutralposition 17 und führt solange abwechselnd die Schritte 24 und 26 aus, bis das Bedienelement 2 sich in der ersten Auslenkposition 18 bzw. zweiten Auslenkposition 20 befindet.

Gemäß einem siebten, achten oder neunten Ausführungsbeispiel der Erfindung ist zwischen Schritt 26 und Schritt 24 noch ein Schritt 28 angeordnet, in welchem nach Prüfung einer oder mehrerer weiterer Auslenkpositionen bzw. Auslenkbereiche temporär in den fünften und/oder einen sechsten Schaltzustand geschaltet werden kann.

Sobald die Prüfung in Schritt 24 ergibt, dass das Bedienelement sich in der ersten Auslenkposition 18 befindet, wird mit Schritt 30 fortgefahren, in welchem überprüft wird, ob die Parkbremse eingelegt ist. Im Falle der nicht eingelegten Parkbremse wird diese in Schritt 32 eingelegt. Die Betätigungseinrichtung wird hierfür vom ersten bzw. siebten Schaltzustand in den zweiten Schaltzustand geschaltet. Hiernach wird in Schritt 34 überprüft, ob die Neutralposition 17 wieder erreicht ist. Solange das Bedienelement 2 betätigt ist, erfolgt eine erneute Überprüfung in Schritt 34. Erst bei Erreichen der Neutralposition 17 bzw. dann, wenn sich das Bedienelement 2 nicht mehr in der ersten Auslenkposition 18 befindet, wird wiederum mit Schritt 24 fortgefahren.

Im Falle der eingelegten Parkbremse folgt auf Schritt 30 ein Schritt 36, in welchem gemäß den Ausführungsbeispielen 1, 2 und 3 die Parkbremse gelöst wird.

Zum Lösen der Parkbremse wird die Betätigungseinrichtung hierbei in den ersten Schaltzustand geschaltet. Alternativ kann die Betätigungseinrichtung jedoch auch derart ausgebildet sein, dass sie in Schritt 36, solange sich das Bedienelement 2 in der ersten Auslenkposition 18 befindet, in den siebten Schaltzustand schaltet und erst nach Rückkehr in die Neutralposition 17 bzw. nach Verlassen der ersten Auslenkposition 18 in den ersten Schaltzustand schaltet. Für eine Verweildauer in Schritt 36 befindet sich die Betätigungseinrichtung somit in dem siebten Schaltzustand. Nach Erreichen des ersten Schaltzustandes wird mit Schritt 24 fortgefahren.

Ggf. erfolgt zwischen den Schritten 24 und 26, 26 und 28 oder 28 und 24 eine Überprüfung, ob eine Zündung weiterhin eingeschaltet ist bzw. ausgeschaltet wird oder wurde. Wenn sich die Betätigungseinrichtung in dem ersten Schaltzustand befindet und ein Ausschalten der Zündung ermittelt wird, wird die Betätigungseinrichtung vom ersten in den zweiten Schaltzustand geschaltet bzw. wird die Parkbremse eingelegt. Ein automatisches Einlegen der Parkbremse wird hingegen unterdrückt, wenn sich die Betätigungseinrichtung in dem siebten Schaltzustand befindet. Der siebte Schaltzustand ist nämlich ggf. in Schritt 36, jedoch nicht zwischen den Schritten 24 und 26, 26 und 28 bzw. 28 und 24 aktiv.

Die Betätigungseinrichtung gemäß einem der Ausführungsbeispiele 4, 5 oder 6 wird in Schritt 36 von dem zweiten Schaltzustand temporär in den dritten Schaltzustand geschaltet. Nach Verlassen der ersten Auslenkposition 18 bzw. nach Rückkehr in die Neutralposition 17 wechselt die Betätigungseinrichtung in den zweiten Schaltzustand zurück. Hiernach wird mit Schritt 24 fortgefahren.

In einer Ausbildung der Betätigungseinrichtung gemäß dem neunten Ausführungsbeispiel kann Schritt 36 auch ohne Funktion sein bzw. entfallen. In diesem Fall folgt auf Schritt 30 Schritt 24.

Sobald Schritt 26 ermittelt, dass sich das Bedienelement 2 in der zweiten Auslenkposition 20 befindet, erfolgt in einem Schritt 38 in analoger Weise zu Schritt 30 eine Überprüfung, ob die Parkbremse eingelegt ist. Im Falle der eingelegten Parkbremse wird in einem Schritt 40 fortgefahren, anderenfalls in einem Schritt 42.

Gemäß den Ausführungsbeispielen 1, 2 und 3 wird die Betätigungseinrichtung in Schritt 40 temporär in den dritten Schaltzustand in analoger Weise geschaltet, wie es zu Schritt 36 bezogen auf die erste Auslenkposition 18 und die Ausführungsbeispiele 4, 5 und 6 beschrieben wurde.

Gemäß den Ausführungsbeispielen 4, 5 und 6 wird die Betätigungseinrichtung in Schritt 40 jedoch zum Lösen der Parkbremse in den ersten bzw. siebten Schaltzustand in analoger Weise geschaltet, wie es wiederum zu Schritt 36 bezogen auf die erste Auslenkposition 18 und die Ausführungsbeispiele 1, 2 und 3 beschrieben wurde.

Schritt 42 kann ohne Funktion sein bzw. entfallen, wobei nach Schritt 38 im Falle der nicht eingelegten Parkbremse Schritt 24 folgt. Gemäß den Ausführungsbeispielen 2, 3, 5 und 6 kann in Schritt 42 jedoch temporär in einen vierten Schaltzustand geschaltet werden. Es wird somit vom ersten Schaltzustand in den vierten Schaltzustand geschaltet und hiernach in den ersten Schaltzustand zurückgeschaltet, bevor mit Schritt 24 fortgefahren wird.

Gemäß den Ausführungsbeispielen 3 und 6 kann in Schritt 42 darüber hinaus in den fünften Schaltzustand geschaltet werden, wobei der fünfte Schaltzustand solange vorliegt, wie das Bedienelement 2 sich in der zweiten Auslenkposition 20 befindet. Alternativ kann die Betätigungseinrichtung jedoch auch derart ausgebildet sein, dass der fünfte Schaltzustand erhalten bleibt, solange sich das Bedienelement 2 nach Rückkehr aus der zweiten Auslenkposition 20 in der Neutralposition 17 befindet bzw. nicht erneut die zweite Auslenkposition 20 oder eine andere Auslenkposition 17 erreicht. Ggf. kann auch eine Automatik in Abhängigkeit von vordefinierten bzw. definierbaren Bedingungen vom fünften in den ersten Schaltzustand zurückschalten.

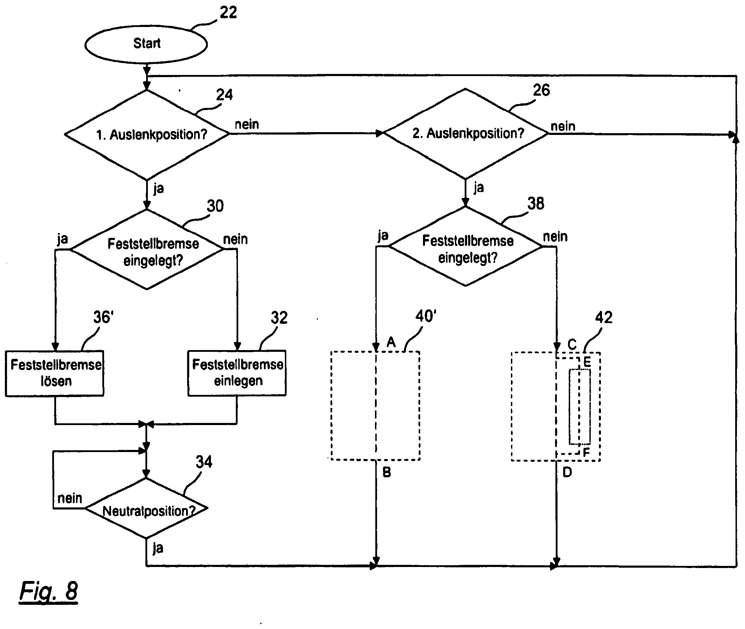

Fig. 8 zeigt ein Flussdiagramm, welches den Ausführungsbeispielen 1, 2, 3 und 7 zugeordnet ist. Dieses Flussdiagramm gleicht in weiten Teilen dem Flussdiagramm gemäß Fig. 7 und konkretisiert die Schaltvorgänge für die Ausführungsbeispiele 1, 2, 3 und 7. Insbesondere bezeichnen gleiche Bezugsziffern gleiche Schritte.

Schritt 28 ist gegenüber dem Ausführungsbeispiel gemäß Fig. 7 entfallen. In Schritt 36' wird die Parkbremse gelöst, wobei, ggf. nach temporärem Schalten in den siebten Schaltzustand, in den ersten Schaltzustand geschaltet wird. Die in der Beschreibung zu Fig. 7 genannten alternativen Funktionen in Schritt 36 entfallen.

Ein Schritt 40' gleicht dem Schritt 40 von Fig. 7, wobei jedoch das auf die Ausführungsbeispiele 4, 5, 6, 8 und 9 bezogene Lösen der Parkbremse entfällt. In Schritt 40' wird somit temporär in den dritten Schaltzustand geschaltet.

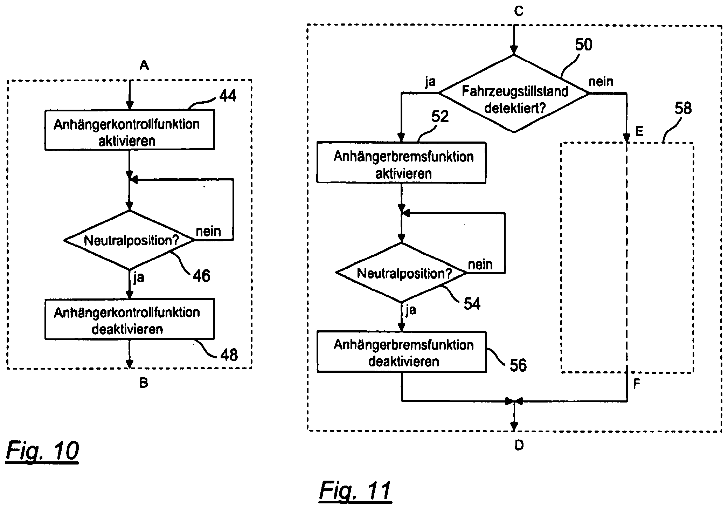

Der Schritt 42 wurde bereits in der Beschreibung zu Fig. 7 in allgemeiner Form beschrieben. Eine genauere Darstellung des Schrittes 42 in unterschiedlichen Varianten findet sich in weiter unten im Text beschriebenen Fig. 11, 12 und 13.

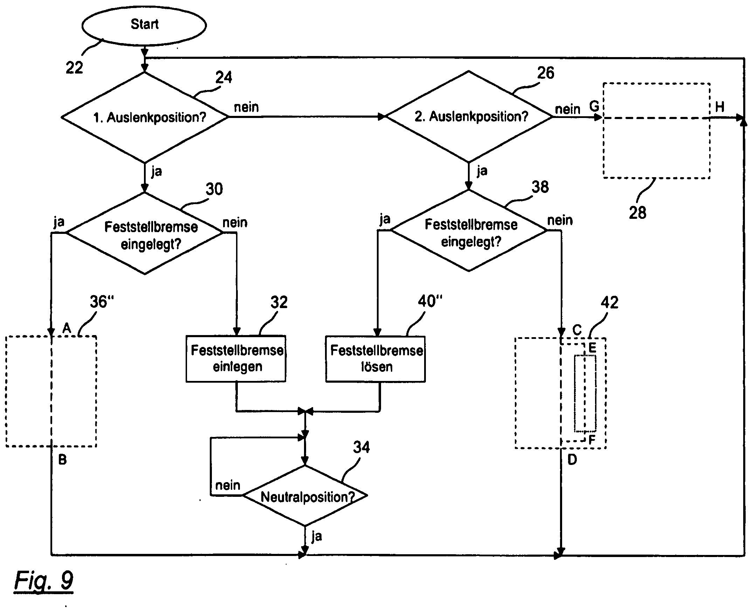

Fig. 9 zeigt Schaltvorgänge aus Fig. 7, welche bezogen auf die Ausführungsbeispiele 4, 5, 6, 8 und 9 konkretisiert sind. Gleiche Bezugsziffern bezeichnen wieder gleiche Schritte. In Schritt 40" wird die Parkbremse gelöst. Das alternative Schalten in den dritten Schaltzustand in Schritt 40" entfällt in diesen Ausführungsbeispielen. Dieses Schalten in den dritten Schaltzustand erfolgt im Falle der Ausführungsbeispiele 4, 5, 6 und 8 in einem Schritt 36". Bezogen auf das Ausführungsbeispiel 9 ist Schritt 36" ohne Funktion bzw. kann entfallen.

Die Schritte 40" und 36" gemäß den Ausführungsbeispielen 4, 5, 6 und 8 gleichen den Schritten 36' und 40' gemäß den Ausführungsbeispielen 1, 2, 3 und 7. Im Falle der eingelegten Parkbremse sind die Funktionen, welche in der ersten Auslenkposition 18 und der zweiten Auslenkposition 20 aufgerufen werden, wechselseitig vertauscht.

Die Reihenfolge, in welcher die Schritte 24, 26 und ggf. 28 durchlaufen werden, ist beliebig. In alternativen nicht gezeigten Ausführungsbeispielen können die Schritte 24, 26 und ggf. 28 im Vergleich zu den gezeigten Ausführungsbeispielen deshalb beliebig untereinander vertauscht sein.

Fig. 10 zeigt den Schritt 40' von Fig. 8 bezogen auf die Ausführungsbeispiele 1, 2, 3 und 7 bzw. den Schritt 36" von Fig. 9 bezogen auf die Ausführungsbeispiele 4, 5, 6 und 8 im Detail. In einem Schritt 44 wird die Betätigungseinrichtung vom zweiten in den dritten Schaltzustand geschaltet. In diesem dritten Schaltzustand ist für eine Anhängerkontrollfunktion gegenüber dem zweiten Schaltzustand die zweite Bremswirkung für ein an das Fahrzeug angekoppeltes Anhängefahrzeug, nicht jedoch die erste Bremswirkung des Fahrzeugs verändert. Insbesondere ist die zweite Bremswirkung, nicht jedoch die erste Bremswirkung invertiert. Somit wird die Parkbremse an dem Anhängefahrzeug gelöst und bleibt gelöst, solange das Bedienelement sich in der zweiten bzw. ersten Auslenkposition 20 bzw. 18 befindet oder zumindest die Neutralposition 17 nicht wieder erreicht hat. Sobald in einem Schritt 46 feststellt wird, dass die Neutralposition 17 erreicht ist, wird in einem Schritt 48 die Anhängerkontrollfunktion deaktiviert, wobei die Betätigungseinrichtung vom dritten in den zweiten Schaltzustand zurückgeschaltet wird. Hiernach wird mit Schritt 24 fortgefahren.

Im Ausführungsbeispiel 9 können Schritte zwischen den Buchstaben A und B entfallen, mithin die Anordnung gemäß Fig. 10 durch einen durchgehenden Pfeil zwischen A und B ersetzt sein.

Fig. 11 zeigt den Schritt 42 in den Fig. 7, 8 und 9 im Falle des zweiten, dritten, fünften, sechsten, siebten und achten Ausführungsbeispiels im Detail. Der Schritt 42 weist einen Schritt 50 auf, in welchem zunächst festgestellt wird, ob das Fahrzeug steht bzw. sich mit einer Geschwindigkeit kleiner als 5 km/h bewegt. Ist dies der Fall, so wechselt die Betätigungseinrichtung in einem Schritt 52 vom ersten in den vierten Schaltzustand, in welchem eine Anhängerbremsfunktion aktiviert ist. Erst nach einem in einem Schritt 54 ermittelten Verlassen der betreffenden Auslenkposition 18 bzw. 20 bzw. nach Rückkehr in die Neutralposition 17 wird in Schritt 56 die Anhängerbremsfunktion wieder deaktiviert, mithin vom vierten in den ersten Schaltzustand zurückgeschaltet. Hiernach folgt wieder Schritt 24 gemäß Fig. 8 bzw. 9.

Falls jedoch in Schritt 50 ermittelt wird, dass sich das Fahrzeug bewegt, insbesondere mit einer Mindestgeschwindigkeit von 5 km/h bewegt, wird anstelle der Schritte 52, 54 und 56 ein Schritt 58 durchlaufen, welcher im Falle des zweiten bzw. fünften Ausführungsbeispiels ohne Funktion ist, jedoch gemäß dem dritten bzw. sechsten Ausführungsbeispiel ein Schalten in den fünften Schaltzustand bewirken kann.

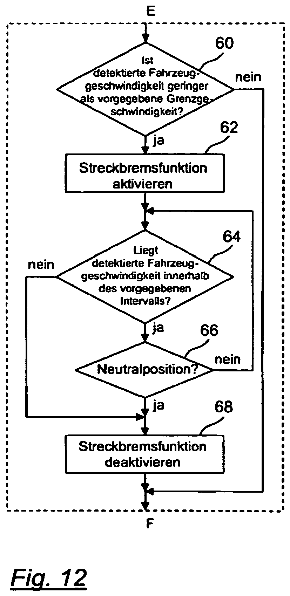

Fig. 12 zeigt den Schritt 58 zwischen den Buchstaben E und F von Fig. 11 gemäß den Ausführungsbeispielen 3 und 6 im Detail. Für die Aktivierung des fünften Schaltzustands bzw. der Streckbremsfunktion ist ein Geschwindigkeitsintervall vorgegeben. Dieses Geschwindigkeitsintervall wird in Richtung großer Geschwindigkeiten durch eine vorgegebene Grenzgeschwindigkeit begrenzt. In einem Schritt 60 wird zunächst festgestellt, ob eine detektierte Fahrzeuggeschwindigkeit geringer als diese vorgegebene Grenzgeschwindigkeit ist. Sofern dies nicht der Fall ist, gelangt man über F und D in Fig. 8 schließlich zu Schritt 24.

Anderenfalls wird in Schritt 62 in den fünften Schaltzustand gewechselt, insbesondere die Streckbremsfunktion aktiviert. In weiteren Schritten 64 und 66 wird überprüft, ob die detektierte Fahrzeuggeschwindigkeit innerhalb des vorgegebenen Geschwindigkeitsintervalls liegt bzw. ob sich das Bedienelement 2 bereits wieder in der Neutralposition 17 befindet. Die Schritte 64 und 66 werden dabei so oft wiederholt durchlaufen, bis entweder die detektierte Fahrzeuggeschwindigkeit nicht mehr innerhalb des vorgegebenen Intervalls liegt oder die Neutralposition 17 erreicht ist bzw. die zweite Auslenkposition 20 verlassen wurde. Hiernach wird in einem Schritt 68 der fünfte Schaltzustand bzw. die Streckbremsfunktion deaktiviert, wobei die Betätigungseinrichtung von dem fünften Schaltzustand in den ersten Schaltzustand zurückschaltet. Über F und D folgt gemäß Fig. 8 bzw. 9 Schritt 24.

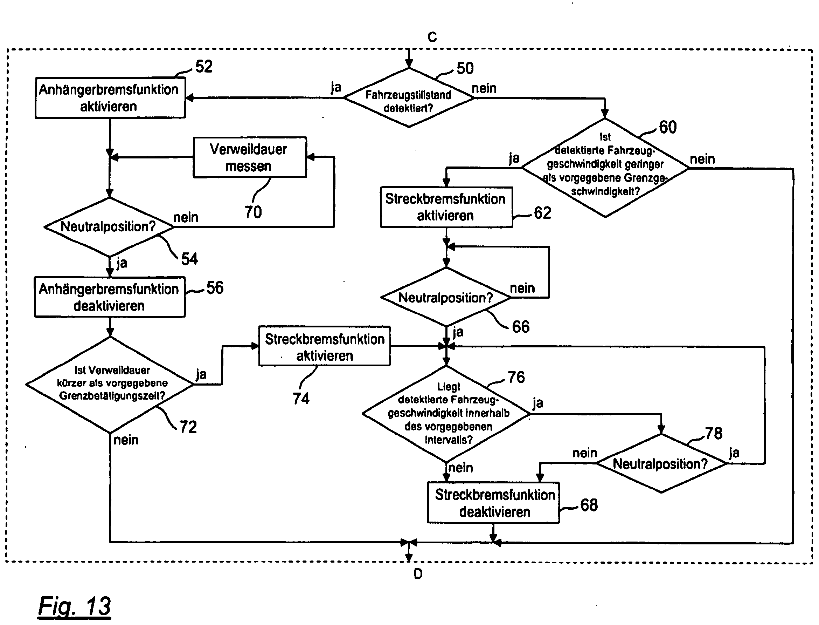

Fig. 13 zeigt einen Ablauf zwischen den Buchstaben C und D in Fig. 8 bzw. 9 bzw. den Schritt 42 der Fig. 7, 8 und 9 entsprechend dem Ausführungsbeispiel 7 bzw. 8. Hierbei umfasst der Schritt 42 einen zu dem Ablauf gemäß Fig. 11 in Verbindung mit Fig. 12 alternativen Ablauf. Der Ablauf gemäß Fig. 13 stellt hierbei die Möglichkeit bereit, auch im Fahrzeugstillstand bzw. bei einer Geschwindigkeit kleiner als 5 km/h in den fünften Schaltzustand zu schalten bzw. die Streckbremsfunktion zu aktivieren. Hierfür ist der Ablauf gemäß Fig. 11 um weitere Schritte ergänzt. Schritte mit gleichen Bezugszeichen bezeichnen gleiche Schritte, weshalb bzgl. deren Funktion auf die Ausführungen zu den Fig. 11 und 12 verwiesen wird.

Die Betätigungseinrichtung wartet nunmehr in Schritt 54 nicht allein ab, bis die Neutralposition 17 erreicht ist. Vielmehr wird in einem Schritt 70 zusätzlich eine Verweildauer des Bedienelements 2 in der zweiten Auslenkposition bzw. eine Dauer, bis zu einem Erreichen der Neutralposition 17 ermittelt. Nach dem Deaktivieren der Anhängerbremsfunktion in Schritt 56 bzw. nach Schalten in den ersten Schaltzustand gelangt man über einen Schritt 72 zu der mit D markierten Stelle, wenn die gemessene Verweildauer länger bzw. nicht kürzer als eine vorgegebene Grenzbetätigungszeit ist. Diese Grenzbetätigungszeit kann alternativ auch vorgebbar sein oder ggf. automatisch in Abhängigkeit von Fahrzeugzuständen und/oder Fahrzuständen angepasst werden.

Sofern das Bedienelement 2 jedoch nur kurz in der zweiten Auslenkposition betätigt wurde, mithin die Verweildauer kürzer als die vorgegebene Grenzbetätigungszeit ist, wird nach Schritt 72 in einem Schritt 74 die Streckbremsfunktion aktiviert bzw. in den fünften Schaltzustand geschaltet.

In einem Schritt 76 wird hiernach analog zu Schritt 64 ermittelt, ob die detektierte Fahrzeuggeschwindigkeit innerhalb des vorgegebenen Geschwindigkeitsintervalls liegt. Sofern dies nicht der Fall ist, wird in Schritt 68 die Streckbremsfunktion deaktiviert bzw. in den ersten Schaltzustand zurückgeschaltet. Ansonsten wird in einem Schritt 78 festgestellt, ob sich das Bedienelement 2 weiterhin in der Neutralposition 17 befindet. Ist dies der Fall, so wird im Sinne einer Schleife wiederum mit Schritt 76 fortgefahren. Anderenfalls wird in Schritt 68 in den ersten Schaltzustand zurückgeschaltet bzw. die Streckbremsfunktion deaktiviert.

Ggf. kann in Abweichung zu Fig. 13 zwischen Schritt 62 und Schritt 66 entsprechend dem Ablauf von Fig. 12 der Schritt 64 eingefügt sein. Der Schritt 64 würde hierbei bewirken, dass mit Schritt 76 fortgefahren wird, wenn die detektierte Fahrzeuggeschwindigkeit nicht mehr innerhalb des vorgegebenen Intervalls liegt, während sich das Bedienelement 2 noch in der zweiten Auslenkposition 20 befindet bzw. die Neutralposition 17 noch nicht erreicht hat.

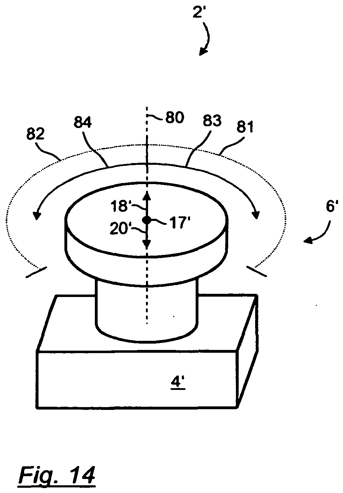

Fig. 14 zeigt ein Bedienelement 2' einer Betätigungseinrichtung gemäß dem neunten Ausführungsbeispiel der Erfindung. Das Bedienelement 2' weist ein als Knauf ausgebildetes Betätigungsmittel 6' auf, welches entlang einer Achse 80 gegenüber einem Grundelement 4' verschiebbar und um diese Achse 80 gegenüber dem Grundelement 4' verschwenkbar angeordnet ist. Das Betätigungsmittel 6' bzw. das Bedienelement 2' nimmt ohne äußere Einwirkungen selbsttätig eine vorbestimmte und in der Figur durch einen Punkt angedeutete Neutralposition 17' ein. Durch Ziehen an dem Betätigungsmittel 6' ist zum Schalten in den zweiten Schaltzustand bzw. zum Einlegen der Parkbremse eine durch einen Pfeil angedeutete erste Auslenkposition 18' erreichbar. Mittels Drücken des Betätigungsmittels 6' in Richtung des Grundelements 4' wird dagegen zum Schalten in den ersten Schaltzustand bzw. zum Lösen der Parkbremse eine durch einen weiteren Pfeil angedeutete zweite Auslenkposition 20' erreicht.

An die Neutralposition 17' grenzen ein erster Auslenkbereich 81 und ein zweiter Auslenkbereich 82 an. Insbesondere wird der erste Auslenkbereich 81 durch eine Rechtsdrehung ausgehend von der Neutralposition 17' erreicht, während der zweite Auslenkbereich 82 durch eine Linksdrehung ausgehend von der Neutralposition 17' erreicht wird. Alternativ können die Auslenkbereiche 81 und 82, wie die Auslenkpositionen 18' und 20' jedoch auch wechselseitig vertauscht sein.

In dem ersten Auslenkbereich 81 ist eine durch einen Pfeil angedeutete dritte Auslenkposition 83 zum Schalten in den fünften Schaltzustand bzw. zum Schalten einer Streckbremsfunktion angeordnet. Ein weiterer Pfeil deutet eine in dem zweiten Auslenkbereich 82 angeordnete vierte Auslenkposition 84 zum Schalten in einen sechsten Schaltzustand bzw. zum Schalten einer dynamischen Abbremsfunktion an. Die dynamische Abbremsfunktion bewirkt sowohl die erste als auch die zweite Bremswirkung, wobei sich beide Bremswirkungen nach der aktuellen Auslenkposition in dem zweiten Auslenkbereich 82 bemessen. Die erste und zweite Bremswirkung kann über die Parkbremse oder über eine per Datenbotschaft veranlasste Betriebsbremsung erfolgen. Entsprechend bemisst sich die zweite Bremswirkung bei der Streckbremsfunktion nach der aktuellen Auslenkposition in dem ersten Auslenkbereich 81.

Alternativ zu dem Ausführungsbeispiel gemäß Fig. 14 kann ein Bedienelement mit einem als Hebel oder Knauf ausgebildeten Betätigungsmittel vorgesehen sein, das nach Art eines Joysticks ausgehend von einer Neutralposition in vier Richtungen auslenkbar bzw. verschwenkbar ist. Beispielsweise kann das Betätigungselement nach vorne in eine erste Auslenkposition und nach hinten in eine zweite Auslenkposition zum Einlegen bzw. Lösen der Parkbremse ausgelenkt werden. Eine dritte und vierte Auslenkposition bzw. ein erster und zweiter Auslenkbereich werden durch eine Auslenkung nach links bzw. rechts erreicht, um hierdurch eine Streckbremsfunktion bzw. dynamische Abbremsfunktion zu aktivieren.

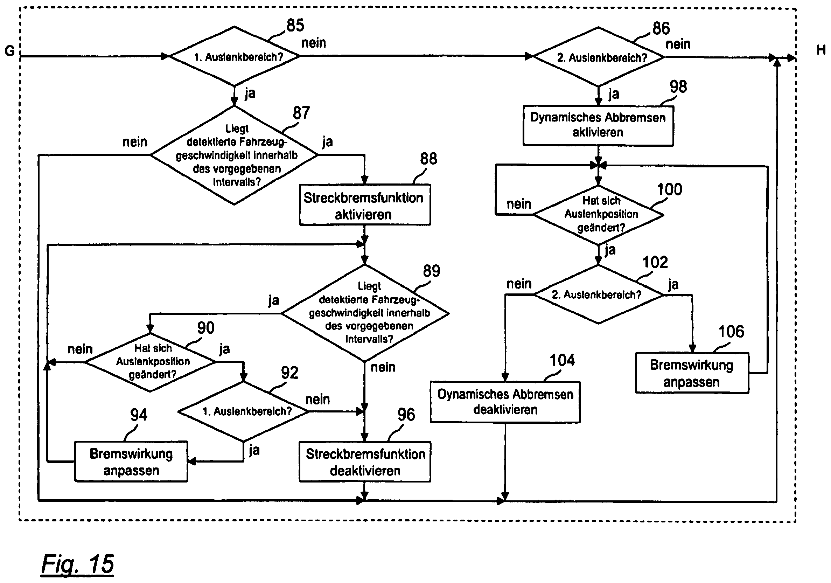

Fig. 15 bezieht sich auf das neunte Ausführungsbeispiel mit dem Bedienelement 2' von Figur 14 und zeigt einen Ablauf, welcher in Fig. 9 zwischen den Buchstaben G und H angeordnet ist und den dortigen Schritt 28 für das neunte Ausführungsbeispiel im Detail beschreibt. In den übrigen Ausführungsbeispielen kann der Schritt 28 hingegen ohne Funktion sein bzw. entfallen.

Ausgehend von G ermittelt die Betätigungseinrichtung in einem Schritt 85, ob sich das Bedienelement 2' in dem ersten Auslenkbereich 81 befindet. Wenn dies nicht der Fall ist, wird nachfolgend in einem Schritt 86 ermittelt, ob sich das Bedienelement 2' in dem zweiten Auslenkbereich 82 befindet. Wenn auch dies nicht der Fall ist, geht es über H weiter zu Schritt 24 gemäß Fig. 9. Die Schritte 24, 26, 85 und 86 können alternativ zu dem gezeigten Ausführungsbeispiel in einer beliebigen anderen Reihenfolge durchlaufen werden.

Sofern in Schritt 85 eine Auslenkung im ersten Auslenkbereich 81 festgestellt wird, wird in einem Schritt 87 geprüft, ob die detektierte Fahrzeuggeschwindigkeit innerhalb des vorgegebenen Geschwindigkeitsintervalls liegt. Wenn dies nicht der Fall ist, wird nichts weiter veranlasst und über H fortgefahren. Anderenfalls wird in einem Schritt 88 in den fünften Schaltzustand geschaltet bzw. die Streckbremsfunktion entsprechend der Position im Auslenkbereich bzw. der Auslenkung aktiviert. Es folgt eine weitere Prüfung in einem Schritt 89, ob die Fahrzeuggeschwindigkeit innerhalb des vorgegebenen Geschwindigkeitsintervalls liegt. Sofern dies der Fall ist, wird mit Schritt 90 fortgefahren, in welchem geprüft wird, ob sich eine Position des Bedienelements 2 in dem ersten Auslenkbereich 81 geändert hat. Sofern dies nicht der Fall ist, gelangt man wieder zu Schritt 89, so dass die Streckbremsfunktion aktiviert bleibt, solange die Fahrzeuggeschwindigkeit innerhalb des vorgegebenen Geschwindigkeitsintervalls liegt und die Position sich nicht ändert.

Wenn allerdings in Schritt 90 festgestellt wird, dass sich die Auslenkung bzw. Position geändert hat, wird in Schritt 92 geprüft, ob sich die Position weiterhin in dem ersten Auslenkbereich 81 befindet. Wenn dies der Fall ist, wird in Schritt 94 die Bremswirkung entsprechend der Position des Bedienelements 2' angepasst. Bspw. erhöht eine weitere Auslenkung von der Neutralposition 17 in dem ersten Auslenkbereich 81 die zweite Bremswirkung an dem Anhängefahrzeug, während eine Verringerung der Auslenkung auch die zweite Bremswirkung verringert.

Sobald entweder in Schritt 89 festgestellt wird, dass die detektierte Fahrzeuggeschwindigkeit nicht mehr innerhalb des vorgegebenen Geschwindigkeitsintervalls liegt, oder in Schritt 92 festgestellt wird, dass die Position sich nicht mehr in dem ersten Auslenkbereich 81 befindet, wird in Schritt 96 in den ersten Schaltzustand zurückgeschaltet bzw. die Streckbremsfunktion deaktiviert, bevor der in Fig. 15 dargestellte Ausschnitt des Flussdiagramms über H verlassen wird.

Im Falle einer in Schritt 86 festgestellten Auslenkung des Bedienelements 2' in dem zweiten Auslenkbereich 82 wird in einem Schritt 98 ein sechster Schaltzustand bzw. ein dynamisches Abbremsen aktiviert.

Entsprechend der Auslenkung bzw. Position in dem zweiten Auslenkbereich 82 wird sowohl die erste Bremswirkung an dem Fahrzeug als auch die zweite Bremswirkung an dem Anhängefahrzeug erzeugt. Diese Bremswirkungen bleiben, unverändert solange nachfolgend in Schritt 100 festgestellt wird, dass sich die Position nicht geändert hat. Nach Änderung der Position wird in Schritt 102 jedoch ermittelt, ob sich die Position weiterhin in dem zweiten Auslenkbereich 82 befindet. Ist dies nicht der Fall, wird vom sechsten Schaltzustand in den ersten Schaltzustand zurückgeschaltet bzw. das dynamische Abbremsen deaktiviert. Hiernach gelangt man zu H.

Wenn sich jedoch die Position geändert hat, ohne dass der zweite Auslenkbereich 82 verlassen wurde, werden in Schritt 106 die Bremswirkungen für das Fahrzeug und das Anhängefahrzeug entsprechend der Auslenkung in dem zweiten Auslenkbereich 82 angepasst. Eine Vergrößerung der Auslenkung ausgehend von der Neutralposition 17' führt hierbei zu einer Vergrößerung der Bremswirkungen. Entsprechend führt eine Verkleinerung der Auslenkung zu einer Verringerung der Bremswirkungen. Nach Anpassung der Bremswirkungen in Schritt 106 gelangt man wieder zu Schritt 100, wo erneut überprüft wird, ob sich die Position gegenüber der zuletzt festgestellten Position im zweiten Auslenkbereich 82 geändert hat.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Betätigungseinrichtung für eine Parkbremse eines Fahrzeugs, insbesondere Nutzfahrzeugs, mit einer für den Fahrbetrieb vorgesehenen Betriebsbremse und der zum Feststellen des Fahrzeugs vorgesehenen Parkbremse,
wobei mittels der Parkbremse eine erste Bremswirkung für dieses Fahrzeug unabhängig von einem Bremsvorgang der Betriebsbremse erzeugbar ist,
wobei die Betätigungseinrichtung einen ersten Schaltzustand aufweist, in dem die Parkbremse gelöst ist, wobei im Falle der gelösten Parkbremse die erste Bremswirkung nicht bereitstellbar ist,
wobei die Betätigungseinrichtung einen zweiten Schaltzustand aufweist, in dem die Parkbremse eingelegt ist, wobei im Falle der eingelegten Parkbremse die, insbesondere volle, erste Bremswirkung der Parkbremse bereitstellbar ist,
wobei die Betätigungseinrichtung ein manuell betätigbares Bedienelement (2, 2') zur Betätigung der Parkbremse aufweist,
wobei das Bedienelement (2, 2') mehrere Auslenkpositionen (18, 18', 20, 20', 83, 84) aufweist,
wobei die Betätigungseinrichtung in einer ersten Auslenkposition (18, 18') im Falle der gelösten Parkbremse in den zweiten Schaltzustand schaltbar ist
und wobei die Betätigungseinrichtung im Falle der eingelegten Parkbremse in den ersten Schaltzustand schaltbar ist,
und wobei die Betätigungseinrichtung in einen weiteren Schaltzustand schaltbar ist,
und wobei mittels der Parkbremse eine zweite Bremswirkung für ein an das Fahrzeug angekoppeltes Anhängefahrzeug unabhängig von einem Bremsvorgang der Betriebsbremse des Zugfahrzeugs erzeugbar ist,
wobei in dem ersten Schaltzustand die zweite Bremswirkung der Parkbremse nicht bereitstellbar ist, wobei in dem zweiten Schaltzustand die, insbesondere volle, zweite Bremswirkung der Parkbremse bereitstellbar ist,
wobei das Bedienelement (2) eine vorbestimmte Neutralposition (17) aufweist und derart ausgebildet ist, dass es ohne äußere Einwirkung diese Neutralposition (17) einnimmt,
wobei die Auslenkpositionen (18, 20, 83, 84) in unterschiedlicher Richtung von der Neutralposition (17) beabstandet sind
und wobei in dem weiteren Schaltzustand gegenüber dem ersten bzw. zweiten Schaltzustand die zweite Bremswirkung, nicht jedoch die erste Bremswirkung verändert ist,
**dadurch gekennzeichnet, dass**
im Falle der gelösten Parkbremse die Betätigungseinrichtung in der zweiten Auslenkposition (20) zur Bereitstellung einer Anhängerbremsfunktion in einen vierten Schaltzustand schaltbar ist,
wobei in diesem vierten Schaltzustand die zweite Bremswirkung, nicht jedoch die erste Bremswirkung bereitstellbar ist,
und wobei Detektionsmittel zum Detektieren eines Fahrzeugstillstands bzw. einer Fahrzeuggeschwindigkeit vorgesehen sind,
wobei die Betätigungseinrichtung ausschließlich im Falle des detektierten Fahrzeugstillstands bzw. einer detektierten unterhalb einer vorgegebenen oder vorgebbaren Maximalgeschwindigkeit befindlichen Fahrzeuggeschwindigkeit in den vierten Schaltzustand schaltbar ist,
und ab der vorgegebenen oder vorgebbaren Maximalgeschwindigkeit automatisch vom vierten Schaltzustand zurück in den ersten Schaltzustand schaltbar ist,
und eine Verweildauer des Bedienelements (2) in der zweiten Auslenkposition (20) detektierbar ist und im Falle der gelösten Parkbremse und in dem Fall, dass sich diese detektierte Verweildauer, insbesondere nach Rückkehr in die Neutralposition (17), unterhalb einer vorgegebenen oder vorgebbaren Grenzbetätigungszeit befindet, die Betätigungseinrichtung in einen fünften Schaltzustand schaltbar ist, wobei in diesem fünften Schaltzustand zur Bereitstellung einer Streckbremsfunktion die zweite Bremswirkung die erste Bremswirkung übersteigt, insbesondere die zweite Bremswirkung, nicht jedoch die erste Bremswirkung bereitstellbar ist,
und wobei die Streckbremsfunktion in diesem Fall auch in der Neutralposition (17) des Bedienelementes (2) aktiviert bleibt.

2. Betätigungseinrichtung nach Anspruch 1,
**dadurch gekennzeichnet, dass**
im Falle der eingelegten Parkbremse die Betätigungseinrichtung in einer zweiten Auslenkposition (20) zum Lösen der Parkbremse in den ersten Schaltzustand schaltbar ist und in der ersten Auslenkposition (18) zur Bereitstellung einer Anhängerkontrollfunktion in den weiteren Schaltzustand schaltbar ist,
wobei dieser weitere Schaltzustand ein dritter Schaltzustand ist, in welchem die erste Bremswirkung, nicht jedoch die zweite Bremswirkung bereitstellbar ist.

3. Betätigungseinrichtung nach Anspruch 1,
**dadurch gekennzeichnet, dass**
im Falle der eingelegten Parkbremse die Betätigungseinrichtung in der ersten Auslenkposition (18) zum Lösen der Parkbremse in den ersten Schaltzustand schaltbar ist und in einer zweiten Auslenkposition (20) zur Bereitstellung einer Anhängerkontrollfunktion in den weiteren Schaltzustand schaltbar ist, wobei dieser weitere Schaltzustand ein dritter Schaltzustand ist, in welchem die erste Bremswirkung, nicht jedoch die zweite Bremswirkung bereitstellbar ist.

4. Betätigungseinrichtung nach Anspruch 1,
**dadurch gekennzeichnet, dass**
im Falle der gelösten Parkbremse die Betätigungseinrichtung in der zweiten Auslenkposition (20) zur Bereitstellung einer Streckbremsfunktion in einen fünften Schaltzustand schaltbar ist, wobei in diesem fünften Schaltzustand die zweite Bremswirkung die erste Bremswirkung übersteigt, insbesondere die zweite Bremswirkung, nicht jedoch die erste Bremswirkung bereitstellbar ist.

5. Betätigungseinrichtung nach Anspruch 4,
**gekennzeichnet durch**
Detektionsmittel zur Detektion eines Fahrzeugstillstands bzw. einer Fahrzeuggeschwindigkeit, wobei die Betätigungseinrichtung ausschließlich im Falle einer detektierten innerhalb eines vorgegebenen oder vorgebbaren Geschwindigkeitsintervalls befindlichen Fahrzeuggeschwindigkeit in den fünften Schaltzustand schaltbar ist.

6. Betätigungseinrichtung für eine Parkbremse eines Fahrzeugs, insbesondere Nutzfahrzeugs, mit einer für den Fahrbetrieb vorgesehenen Betriebsbremse und der zum Feststellen des Fahrzeugs vorgesehenen Parkbremse,
wobei mittels der Parkbremse eine erste Bremswirkung für dieses Fahrzeug unabhängig von einem Bremsvorgang der Betriebsbremse erzeugbar ist,
wobei die Betätigungseinrichtung einen ersten Schaltzustand aufweist, in dem die Parkbremse gelöst ist, wobei im Falle der gelösten Parkbremse die erste Bremswirkung nicht bereitstellbar ist,
wobei die Betätigungseinrichtung einen zweiten Schaltzustand aufweist, in dem die Parkbremse eingelegt ist, wobei im Falle der eingelegten Parkbremse die, insbesondere volle, erste Bremswirkung der Parkbremse bereitstellbar ist,
wobei die Betätigungseinrichtung ein manuell betätigbares Bedienelement (2, 2') zur Betätigung der Parkbremse aufweist,
wobei das Bedienelement (2, 2') mehrere Auslenkpositionen (18, 18', 20, 20', 83, 84) aufweist,
wobei die Betätigungseinrichtung in einer ersten Auslenkposition (18, 18') im Falle der gelösten Parkbremse in den zweiten Schaltzustand schaltbar ist
und wobei die Betätigungseinrichtung im Falle der eingelegten Parkbremse in den ersten Schaltzustand schaltbar ist,
und wobei die Betätigungseinrichtung in einen weiteren Schaltzustand schaltbar ist,
und wobei mittels der Parkbremse eine zweite Bremswirkung für ein an das Fahrzeug angekoppeltes Anhängefahrzeug unabhängig von einem Bremsvorgang der Betriebsbremse des Zugfahrzeugs erzeugbar ist,
wobei in dem ersten Schaltzustand die zweite Bremswirkung der Parkbremse nicht bereitstellbar ist, wobei in dem zweiten Schaltzustand die, insbesondere volle, zweite Bremswirkung der Parkbremse bereitstellbar ist,
wobei das Bedienelement (2) eine vorbestimmte Neutralposition (17) aufweist und derart ausgebildet ist, dass es ohne äußere Einwirkung diese Neutralposition (17) einnimmt,
wobei die Auslenkpositionen (18, 20, 83, 84) in unterschiedlicher Richtung von der Neutralposition (17) beabstandet sind
und wobei in dem weiteren Schaltzustand gegenüber dem ersten bzw. zweiten Schaltzustand die zweite Bremswirkung, nicht jedoch die erste Bremswirkung verändert ist,
**dadurch gekennzeichnet, dass**
im Falle der eingelegten Parkbremse die Betätigungseinrichtung in einer zweiten Auslenkposition (20') zum Lösen der Parkbremse in den ersten Schaltzustand schaltbar ist,
das Bedienelement (2') eine dritte Auslenkposition (83) aufweist und die Betätigungseinrichtung in dieser dritten Auslenkposition (83), insbesondere im Falle der gelösten Parkbremse, zur Bereitstellung einer Streckbremsfunktion in den weiteren Schaltzustand schaltbar ist,
wobei dieser weitere Schaltzustand ein fünfter Schaltzustand ist, in welchem die zweite Bremswirkung die erste Bremswirkung übersteigt, insbesondere die zweite, nicht jedoch die erste Bremswirkung bereitstellbar ist, und die zweite Bremswirkung stufenlos oder stufbar veränderbar ist,
wobei die dritte Auslenkposition (83) in einem sog. ersten, insbesondere zu der Neutralposition benachbarten, Auslenkbereich (81) angeordnet ist und sich die zweite Bremswirkung nach einer Position in diesem ersten Auslenkbereich (81) bemisst,
und das Bedienelement (2') ein Betätigungsmittel (6') aufweist, welches gegenüber einem Grundelement (4') des Bedienelements (2') längs einer Achse (80) drückbar, ziehbar und um diese Achse (80) verschwenkbar ist,
wobei ausgehend von der Neutralposition (17') mittels Ziehen die erste Auslenkposition (18'), mittels Drücken die zweite Auslenkposition (20'), mittels Verschwenken in eine erste Richtung die dritte Auslenkposition (83) und mittels Verschwenken in eine zweite Richtung eine vierte Auslenkposition (84) erreichbar sind.

7. Betätigungseinrichtung nach Anspruch 6,
**dadurch gekennzeichnet, dass**
das Bedienelement (2') eine vierte Auslenkposition (84) aufweist, welche in einem, insbesondere benachbart zu der Neutralposition (17') angeordneten, zweiten Auslenkbereich (82) angeordnet ist,
und die Betätigungseinrichtung in dieser vierten Auslenkposition (84), insbesondere im Falle der gelösten Parkbremse, zur Bereitstellung einer dynamischen Abbremsfunktion in einen sechsten Schaltzustand schaltbar ist, wobei in diesem sechsten Schaltzustand die erste und die zweite Bremswirkung stufenlos oder stufbar bereitstellbar sind
und wobei sich die erste und die zweite Bremswirkung nach einer Position in diesem zweiten Auslenkbereich (82) bemessen.

8. Betätigungseinrichtung nach einem der Ansprüche 6 oder 7,
**dadurch gekennzeichnet, dass**
in Erwiderung auf ein Verlassen der dritten bzw. vierten Auslenkposition (83, 84) bzw. in Erwiderung auf ein Verlassen des ersten bzw. zweiten Auslenkbereichs (81, 82), insbesondere in Erwiderung auf eine Rückkehr in die Neutralposition (17'), die Betätigungseinrichtung in den ersten Schaltzustand schaltbar ist, insbesondere wenn die Betätigungseinrichtung sich vor der Betätigung in die dritte oder vierte Auslenkposition bzw. den ersten oder zweiten Auslenkbereich im ersten Schaltzustand befunden hat.

9. Betätigungseinrichtung nach Anspruch 6,
**dadurch gekennzeichnet, dass**
das Bedienelement (2') derart ausgebildet ist, dass die erste Auslenkposition (18') ausgehend von der zweiten Auslenkposition (20') und die zweite Auslenkposition (20') ausgehend von der ersten Auslenkposition (18'), sowie die erste und zweite Auslenkposition (18', 20') ausgehend von der dritten bzw. vierten Auslenkposition (83, 84) ausschließlich über die Neutralposition (17') erreichbar sind und dass
sich das Bedienelement (2') in dem Fall, dass es sich ggf. in der dritten bzw. vierten Auslenkposition (83, 84) befindet, in Erwiderung auf ein Ziehen oder Drücken zunächst in die Neutralposition (17') und ggf. hiernach in die erste bzw. zweite Auslenkposition (18', 20') begibt.

10. Betätigungseinrichtung nach einem der vorhergehenden Ansprüche, **gekennzeichnet durch**
einen siebten Schaltzustand, in welchem die erste und die zweite Bremswirkung der Parkbremse nicht bereitstellbar sind,
wobei die Betätigungseinrichtung in dem Fall, dass sie sich in dem ersten Schaltzustand befindet, in Erwiderung auf ein Ausschalten einer Zündung automatisch in den zweiten Schaltzustand schaltbar ist
und wobei die Betätigungseinrichtung derart beschaffen ist, dass das automatische Schalten in den zweiten Schaltzustand unterdrückt wird, falls die Betätigungseinrichtung sich in dem siebten Schaltzustand befindet.

## Claims

1. Actuating device for a parking brake of a vehicle, in particular utility vehicle, having a service brake provided for driving operation and having the parking brake provided for immobilizing the vehicle,
wherein a first braking action for said vehicle can be generated by means of the parking brake independently of a braking process of the service brake,
wherein the actuating device has a first switching state, in which the parking brake is released,
wherein if the parking brake is released the first braking action cannot be provided,
wherein the actuating device has a second switching state in which the parking brake is engaged,
wherein if the parking brake is engaged the in particular full first braking action of the parking brake can be provided,
wherein the actuating device has a manually actuable control element (2, 2') for actuating the parking brake,
wherein the control element (2, 2') has a plurality of deflection positions (18, 18', 20, 20', 83, 84),
wherein the actuating device, in a first deflection position (18, 18'), if the parking brake is released, can be switched into the second switching state,
and wherein the actuating device, if the parking brake is engaged, can be switched into the first switching state,
and wherein the actuating device can be switched into a further switching state,
and wherein, by means of the parking brake, a second braking action for a trailer vehicle coupled to the vehicle can be generated independently of a braking process of the service brake of the tractor vehicle,
wherein in the first switching state, the second braking action of the parking brake cannot be provided, wherein in the second switching state, the in particular full second braking action of the parking brake can be provided,
wherein the control element (2) has a predetermined neutral position (17) and is designed so as to assume said neutral position (17) when not subjected to external action,
wherein the deflection positions (18, 20, 83, 84) are spaced apart from the neutral position (17) in different directions,
and wherein in the further switching state, the second braking action but not the first braking action is changed in relation to the first and/or second switching state,
**characterized in that**,
if the parking brake is released, the actuating device, in the second deflection position (20), can be switched into a fourth switching state in order to provide a trailer braking function,
wherein in said fourth switching state, the second braking action but not the first braking action can be provided,
and wherein detection means for detecting a vehicle standstill state or a vehicle speed are provided,
wherein the actuating device can be switched into the fourth switching state only if the vehicle standstill state is detected or if a vehicle speed is detected which is below a predefined or predefinable maximum speed,
and above the predefined or predefinable maximum speed can be switched automatically from the fourth switching state back into the first switching state and a residence time of the control element (2) in the second deflection position (20) can be detected, and if the parking brake is released and if said detected residence time, in particular after a return into the neutral position (17), lies below a predefined or predefinable limit actuating time, the actuating device can be switched into a fifth switching state, wherein in said fifth switching state, in order to provide an anti-jackknifing braking function, the second braking action exceeds the first braking action, in particular the second braking action but not the first braking action can be provided,
and wherein the anti-jackknifing braking function in this case remains activated even in the neutral position (17) of the control element (2).

2. Actuating device according to Claim 1,
**characterized in that**,
if the parking brake is engaged, the actuating device, in a second deflection position (20), can be switched into the first switching state in order to release the parking brake, and in the first deflection position (18), can be switched into the further switching state in order to provide a trailer testing function,
wherein said further switching state is a third switching state in which the first braking action but not the second braking action can be provided.

3. Actuating device according to Claim 1,
**characterized in that**,
if the parking brake is engaged, the actuating device, in the first deflection position (18), can be switched into the first switching state in order to release the parking brake, and in a second deflection position (20), can be switched into the further switching state in order to provide a trailer testing function, wherein said further switching state is a third switching state in which the first braking action but not the second braking action can be provided.

4. Actuating device according to Claim 1,
**characterized in that**,
if the parking brake is released, the actuating device, in the second deflection position (20), can be switched into a fifth switching state in order to provide an anti-jackknifing braking function, wherein in said fifth switching state, the second braking action exceeds the first braking action, in particular the second braking action, but the first braking action cannot be provided.

5. Actuating device according to Claim 4,
**characterized by**
detection means for detecting a vehicle standstill state or a vehicle speed, wherein the actuating device can be switched into the fifth switching state only if a vehicle speed is detected which lies within a predefined or predefinable speed interval.

6. Actuating device for a parking brake of a vehicle, in particular utility vehicle, having a service brake provided for driving operation and having the parking brake provided for immobilizing the vehicle,
wherein a first braking action for said vehicle can be generated by means of the parking brake independently of a braking process of the service brake,
wherein the actuating device has a first switching state, in which the parking brake is released, wherein if the parking brake is released the first braking action cannot be provided,
wherein the actuating device has a second switching state in which the parking brake is engaged, wherein if the parking brake is engaged the in particular full first braking action of the parking brake can be provided,
wherein the actuating device has a manually actuable control element (2, 2') for actuating the parking brake,
wherein the control element (2, 2') has a plurality of deflection positions (18, 18', 20, 20', 83, 84),
wherein the actuating device, in a first deflection position (18, 18'), if the parking brake is released, can be switched into the second switching state,
and wherein the actuating device, if the parking brake is engaged, can be switched into the first switching state,
and wherein the actuating device can be switched into a further switching state,
and wherein, by means of the parking brake, a second braking action for a trailer vehicle coupled to the vehicle can be generated independently of a braking process of the service brake of the tractor vehicle,
wherein in the first switching state, the second braking action of the parking brake cannot be provided, wherein in the second switching state, the in particular full second braking action of the parking brake can be provided,
wherein the control element (2) has a predetermined neutral position (17) and is designed so as to assume said neutral position (17) when not subjected to external action,
wherein the deflection positions (18, 20, 83, 84) are spaced apart from the neutral position (17) in different directions,
and wherein in the further switching state, the second braking action but not the first braking action is changed in relation to the first and/or second switching state,
**characterized in that**, if the parking brake is engaged, the actuating device, in a second deflection position (20'), can be switched into the first switching state in order to release the parking brake,
the control element (2') has a third deflection position (83) and the actuating device, in said third deflection position (83), in particular if the parking brake is released, can be switched into the further switching state in order to provide an anti-jackknifing braking function,
wherein said further switching state is a fifth switching state in which the second braking action exceeds the first braking action, in particular the second braking action but not the first braking action can be provided,
and the second braking action can be varied in a continuous or stepped fashion,
wherein the third deflection position (83) is arranged in a so-called first deflection region (81) adjacent to the neutral position, and the second braking action is dimensioned according to a position in said first deflection region (81),
and the control element (2') has an actuating means (6') which, in relation to a base element (4') of the control element (2'), can be pushed and pulled along an axis (80) and pivoted about said axis (80), wherein proceeding from the neutral position (17'), the first deflection position (18') can be reached by pulling, the second deflection position (20') can be reached by pushing, the third deflection position (83) can be reached by pivoting in a first direction, and a fourth deflection position (84) can be reached by pivoting in a second direction.

7. Actuating device according to Claim 6,
**characterized in that**
the control element (2') has a fourth deflection position (84) which is arranged in a second deflection region (82) arranged in particular adjacent to the neutral position (17'),
and the actuating device, in said fourth deflection position (84), in particular if the parking brake is released, can be switched into a sixth switching state in order to provide a dynamic braking function, wherein in said sixth switching state, the first braking action and the second braking action can be provided in a continuous or stepped fashion,
and wherein the first braking action and the second braking action are dimensioned according to a position in said second deflection region (82).

8. Actuating device according to either of Claims 6 and 7,
**characterized in that**,
in response to a departure from the third or fourth deflection position (83, 84) and/or in response to a departure from the first or second deflection region (81, 82), in particular in response to a return into the neutral position (17'), the actuating device can be switched into the first switching state, in particular if the actuating device was situated in the first switching state before the actuation into the third or fourth deflection position and/or into the first or second deflection region.

9. Actuating device according to Claim 6,
**characterized in that**
the control element (2') is designed such that the first deflection position (18') can be reached proceeding from the second deflection position (20') and the second deflection position (20') can be reached proceeding from the first deflection position (18'), and the first and second deflection positions (18', 20') can be reached proceeding from the third and fourth deflection positions (83, 84), only via the neutral position (17'), and **in that** the control element, if it is situated, if appropriate, in the third or fourth deflection position (83, 84), moves initially into the neutral position (17') and if appropriate subsequently into the first or second deflection position (18', 20') in response to a pulling or pushing action.

10. Actuating device according to one of the preceding claims,
**characterized by**
a seventh switching state in which the first braking action and the second braking action of the parking brake cannot be provided,
wherein the actuating device, if it is situated in the first switching state, can be automatically switched into the second switching state in response to a deactivation of an ignition,
and wherein the actuating device is designed such that the automatic switching into the second switching state is prevented if the actuating device is situated in the seventh switching state.

## Revendications

1. Dispositif d'actionnement pour un frein de stationnement d'un véhicule, en particulier d'un véhicule utilitaire, comprenant un frein de service prévu pour le fonctionnement pendant la conduite et le frein de stationnement prévu pour immobiliser le véhicule,
un premier effet de freinage pouvant être produit pour ce véhicule au moyen du frein de stationnement indépendamment d'une opération de freinage du frein de service,
le dispositif d'actionnement présentant un premier état de commutation dans lequel le frein de stationnement est desserré, et lorsque le frein de stationnement est desserré, le premier effet de freinage ne pouvant pas être réalisé,
le dispositif d'actionnement présentant un deuxième état de commutation dans lequel le frein de stationnement est enclenché, et lorsque le frein de stationnement est enclenché, le premier effet de freinage, notamment complet, du frein de stationnement pouvant être réalisé,
le dispositif d'actionnement présentant un élément de commande (2, 2') actionnable manuellement pour l'actionnement du frein de stationnement,
l'élément de commande (2, 2') présentant plusieurs positions de déflection (18, 18', 20, 20', 83, 84),
le dispositif d'actionnement pouvant être commuté dans le deuxième état de commutation, dans une première position de déflection (18, 18') lorsque le frein de stationnement est desserré,
et le dispositif d'actionnement, lorsque le frein de stationnement est enclenché, pouvant être commuté dans le premier état de commutation,
et le dispositif d'actionnement pouvant être commuté dans un état de commutation supplémentaire,
et un deuxième effet de freinage pour un véhicule remorque accouplé au véhicule pouvant être produit au moyen du frein de stationnement indépendamment d'une opération de freinage du frein de service du véhicule tracteur,
et dans le premier état de commutation, le deuxième effet de freinage du frein de stationnement ne pouvant pas être réalisé, et dans le deuxième état de commutation le deuxième effet de freinage, notamment complet, du frein de stationnement pouvant être réalisé,
l'élément de commande (2) présentant une position neutre prédéterminée (17) et étant réalisé de telle sorte qu'il adopte, sans influence extérieure, cette position neutre (17),
les positions de déflection (18, 20, 83, 84) étant espacées dans une direction différente de la position neutre (17),
et dans l'état de commutation supplémentaire par rapport au premier ou au deuxième état de commutation, le deuxième état de freinage étant modifié, mais pas le premier état de freinage,
**caractérisé en ce que**,
lorsque le frein de stationnement est desserré, le dispositif d'actionnement dans la deuxième position de déflection (20) peut être commuté dans un quatrième état de commutation pour réaliser une fonction de freinage de remorque,
et dans ce quatrième état de commutation le deuxième effet de freinage, mais pas le premier effet de freinage, peut être réalisé, des moyens de détection pour détecter un état d'arrêt du véhicule ou une vitesse du véhicule étant prévus,
le dispositif d'actionnement pouvant être commuté dans le quatrième état de commutation exclusivement lorsque l'état d'arrêt du véhicule est détecté ou qu'une vitesse du véhicule est détectée en dessous d'une vitesse maximale prédéfinie ou prédéfinissable,
et pouvant être commuté automatiquement du quatrième état de commutation de retour dans le premier état de commutation à partir de la vitesse maximale prédéfinie ou prédéfinissable,
et une durée de séjour de l'élément de commande (2) dans la deuxième position de déflection (20) pouvant être, détectée et lorsque le frein de stationnement est desserré, et lorsque cette durée de séjour détectée, notamment après le retour dans la position neutre (17), se situe en dessous d'un temps d'actionnement limite prédéfini ou prédéfinissable, le dispositif d'actionnement pouvant être commuté dans un cinquième état de commutation, et dans ce cinquième état de commutation, pour réaliser une fonction de freinage de maintien en ligne, le deuxième effet de freinage dépassant le premier effet de freinage, en particulier le deuxième effet de freinage pouvant être réalisé, mais pas le premier effet de freinage,
et la fonction de freinage de maintien en ligne restant activée dans ce cas également dans la position neutre (17) de l'élément de commande (2).

2. Dispositif d'actionnement selon la revendication 1, **caractérisé en ce que**
lorsque le frein de stationnement est enclenché, le dispositif d'actionnement dans une deuxième position de déflection (20) peut être commuté dans le premier état de commutation pour desserrer le frein de stationnement, et dans la première position de déflection (18) peut être commuté dans l'état de commutation supplémentaire pour réaliser une fonction de contrôle de remorque,
cet état de commutation supplémentaire étant un troisième état de commutation, dans lequel le premier effet de freinage, mais pas le deuxième effet de freinage, peut être réalisé.

3. Dispositif d'actionnement selon la revendication 1,
**caractérisé en ce que**
lorsque le frein de stationnement est enclenché, le dispositif d'actionnement dans la première position de déflection (18) peut être commuté dans le premier état de commutation pour desserrer le frein de stationnement, et dans une deuxième position de déflection (20), peut être commuté dans l'état de commutation supplémentaire pour réaliser une fonction de contrôle de remorque, cet état de commutation supplémentaire étant un troisième état de commutation dans lequel le premier effet de freinage, mais pas le deuxième effet de freinage, peut être réalisé.

4. Dispositif d'actionnement selon la revendication 1,
**caractérisé en ce que**
lorsque le frein de stationnement est desserré, le dispositif d'actionnement dans la deuxième position de déflection (20) peut être commuté dans un cinquième état de commutation pour réaliser une fonction de freinage de maintien en ligne, et dans ce cinquième état de commutation, le deuxième effet de freinage dépasse le premier effet de freinage, notamment le deuxième effet de freinage peut être réalisé, mais pas le premier effet de freinage.

5. Dispositif d'actionnement selon la revendication 4,
**caractérisé par**
des moyens de détection pour la détection d'un état d'arrêt du véhicule ou d'une vitesse du véhicule, le dispositif d'actionnement pouvant être commuté dans le cinquième état de commutation exclusivement lorsque la vitesse du véhicule détectée est dans un intervalle de vitesse prédéfini ou prédéfinissable.

6. Dispositif d'actionnement pour un frein de stationnement d'un véhicule, en particulier d'un véhicule utilitaire, comprenant un frein de service prévu pour le fonctionnement pendant la conduite et le frein de stationnement prévu pour immobiliser le véhicule,
un premier effet de freinage pouvant être produit pour ce véhicule au moyen du frein de stationnement indépendamment d'une opération de freinage du frein de service,
le dispositif d'actionnement présentant un premier état de commutation dans lequel le frein de stationnement est desserré, et lorsque le frein de stationnement est desserré, le premier effet de freinage ne pouvant pas être réalisé,
le dispositif d'actionnement présentant un deuxième état de commutation dans lequel le frein de stationnement est enclenché, et lorsque le frein de stationnement est enclenché, le premier effet de freinage, notamment complet, du frein de stationnement pouvant être réalisé,
le dispositif d'actionnement présentant un élément de commande (2, 2') actionnable manuellement pour l'actionnement du frein de stationnement, l'élément de commande (2, 2') présentant plusieurs positions de déflection (18, 18', 20, 20', 83, 84),
le dispositif d'actionnement pouvant être commuté dans le deuxième état de commutation, dans une première position de déflection (18, 18') lorsque le frein de stationnement est desserré,
et le dispositif d'actionnement, lorsque le frein de stationnement est enclenché, pouvant être commuté dans le premier état de commutation,
et le dispositif d'actionnement pouvant être commuté dans un état de commutation supplémentaire,
et un deuxième effet de freinage pour un véhicule remorque accouplé au véhicule pouvant être produit au moyen du frein de stationnement indépendamment d'une opération de freinage du frein de service du véhicule tracteur,
et dans le premier état de commutation, le deuxième effet de freinage du frein de stationnement ne pouvant pas être réalisé, et dans le deuxième état de commutation le deuxième effet de freinage, notamment complet, du frein de stationnement pouvant être réalisé,
l'élément de commande (2) présentant une position neutre prédéterminée (17) et étant réalisé de telle sorte qu'il adopte, sans influence extérieure, cette position neutre (17),
les positions de déflection (18, 20, 83, 84) étant espacées dans une direction différente de la position neutre (17),
et dans l'état de commutation supplémentaire par rapport au premier ou au deuxième état de commutation, le deuxième état de freinage étant modifié, mais pas le premier état de freinage,
**caractérisé, en ce que**
lorsque le frein de stationnement est enclenché, le dispositif d'actionnement dans une deuxième position de déflection (20') peut être commuté dans le premier état de commutation pour desserrer le frein de stationnement,
l'élément de commande (2') présente une troisième position de déflection (83) et le dispositif d'actionnement dans cette troisième position de déflection (83), en particulier lorsque le frein de stationnement est desserré, peut être commuté dans l'état de commutation supplémentaire pour réaliser une fonction de freinage de maintien en ligne,
cet état de commutation supplémentaire étant un cinquième état de commutation, dans lequel le deuxième effet de freinage dépasse le premier effet de freinage, notamment le deuxième effet de freinage peut être réalisé, mais pas le premier effet de freinage,
et le deuxième effet de freinage peut être modifié en continu ou par incréments,
la troisième position de déflection (83) étant disposée dans une région de déflection (81) dite première région de déflection, en particulier adjacente à la position neutre, et le deuxième effet de freinage se dimensionnant en fonction d'une position dans cette première région de déflection (81),
et l'élément de commande (2') présente un moyen d'actionnement (6') qui peut être pressé par rapport à un élément de base (4') de l'élément de commande (2') le long d'un axe (80), et qui peut être tiré et pivoté autour de cet axe (80), et partant de la position neutre (17'), la première position de déflection (18') pouvant être obtenue par traction, la deuxième position de déflection (20') pouvant être obtenue par pression, la troisième position de déflection (83) pouvant être obtenue au moyen d'un pivotement dans une première direction, et une quatrième position de déflection (84) pouvant être obtenue au moyen d'un pivotement dans une deuxième direction.

7. Dispositif d'actionnement selon la revendication 6,
**caractérisé en ce que**
l'élément de commande (2') présente une quatrième position de déflection (84), qui est disposée dans une deuxième région de déflection (82) disposée notamment de manière adjacente à la position neutre (17'),
et le dispositif d'actionnement, dans cette quatrième position de déflection (84), notamment lorsque le frein de stationnement est desserré, peut être commuté dans un sixième état de commutation pour réaliser une fonction de freinage dynamique, et dans ce sixième état de commutation, le premier et le deuxième effet de freinage pouvant être réalisés en continu ou par incréments,
et le premier et le deuxième effet de freinage se dimensionnant en fonction d'une position dans cette deuxième région de déflection (82).

8. Dispositif d'actionnement selon l'une quelconque des revendications 6 ou 7,
**caractérisé en ce**
**qu'**en réponse à une sortie de la troisième ou de la quatrième position de déflection (83, 84), ou en réponse à une sortie de la première ou de la deuxième région de déflection (81, 82), en particulier en réponse à un retour dans la position neutre (17'), le dispositif d'actionnement peut être commuté dans le premier état de commutation, en particulier lorsque le dispositif d'actionnement s'est trouvé dans le premier état de commutation avant l'actionnement dans la troisième ou la quatrième position de déflection ou la premier ou la deuxième région de déflection.

9. Dispositif d'actionnement selon la revendication 6, **caractérisé en ce que**
l'élément de commande (2') est réalisé de telle sorte que la première position de déflection (18'), partant de la deuxième position de déflection (20'), et la deuxième position de déflection (20'), partant de la première position de déflection (18'), ainsi que la première et la deuxième position de déflection (18', 20'), partant de la troisième ou de la quatrième position de déflection (83, 84), puissent être obtenues exclusivement par le biais de la position neutre (17'), et de telle sorte que
l'élément de commande (2'), lorsqu'il se trouve éventuellement dans la troisième ou la quatrième position de déflection (83, 84), en réponse à une traction ou une pression, passe d'abord dans la position neutre (17') et éventuellement ensuite dans la première ou la deuxième position de déflection (18', 20').

10. Dispositif d'actionnement selon l'une quelconque des revendications précédentes,
**caractérisé par**
un septième état de commutation, dans lequel le premier et le deuxième effet de freinage du frein de stationnement ne peuvent pas être réalisés,
le dispositif d'actionnement, lorsqu'il se trouve dans le premier état de commutation, en réponse à une déconnexion d'un allumage, pouvant être commuté automatiquement dans le deuxième état de commutation,
et le dispositif d'actionnement étant réalisé de telle sorte que la commutation automatique dans le deuxième état de commutation soit empêchée si le dispositif d'actionnement se trouve dans le septième état de commutation.
